(19) Europäisches Patentamt / European Patent Office / Office européen des brevets

(11) **EP 2 201 326 B1**

(12) **EUROPÄISCHE PATENTSCHRIFT**

(45) Veröffentlichungstag und Bekanntmachung des Hinweises auf die Patenterteilung:
**31.07.2013 Patentblatt 2013/31**

(21) Anmeldenummer: **08840592.3**

(22) Anmeldetag: **16.10.2008**

(51) Int Cl.:
*G01S 17/89* (2006.01)      *G01S 17/46* (2006.01)
*G01B 11/02* (2006.01)      *G01B 11/04* (2006.01)
*B60K 31/00* (2006.01)      *G06T 7/00* (2006.01)
*G06T 7/20* (2006.01)

(86) Internationale Anmeldenummer:
**PCT/EP2008/008770**

(87) Internationale Veröffentlichungsnummer:
**WO 2009/049887 (23.04.2009 Gazette 2009/17)**

(54) **VERFAHREN ZUR ABSTANDSBESTIMMUNG**

METHOD FOR DETERMINING DISTANCE

PROCÉDÉ DE DÉTERMINATION DE DISTANCE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.10.2007 DE 102007050052**

(43) Veröffentlichungstag der Anmeldung:
**30.06.2010 Patentblatt 2010/26**

(73) Patentinhaber: **IFM Electronic GmbH
45128 Essen (DE)**

(72) Erfinder: **SCHWARTE, Rudolf
57250 Netphen/Dreis-Tiefenbach (DE)**

(74) Vertreter: **Gesthuysen, Hans Dieter
Gesthuysen, von Rohr & Eggert
Huyssenallee 100
45128 Essen (DE)**

(56) Entgegenhaltungen:
**US-B1- 6 535 114**

- ANDREW J DAVISON ET AL: "MonoSLAM: Real-Time Single Camera SLAM" IEEE TRANSACTIONS ON PATTERN ANALYSIS AND MACHINE INTELLIGENCE, IEEE SERVICE CENTER, LOS ALAMITOS, CA, US, Bd. 29, Nr. 6, 1. Juni 2007 (2007-06-01), Seiten 1052-1067, XP011179664 ISSN: 0162-8828
- BOLLES R C ET AL: "EPIPOLAR-PLANE IMAGE ANALYSIS: AN APPROACH TO DETERMINING STRUCTUREFROM MOTION" INTERNATIONAL JOURNAL OF COMPUTER VISION, DORDRECHT, NL, 1. Januar 1987 (1987-01-01), Seiten 7-55, XP000572465
- CIPOLLA R ET AL: "Robust structure from motion using motion parallax" COMPUTER VISION, 1993. PROCEEDINGS., FOURTH INTERNATIONAL CONFERENCE O N BERLIN, GERMANY 11-14 MAY 1993, LOS ALAMITOS, CA, USA,IEEE COMPUTER SOCI, 11. Mai 1993 (1993-05-11), Seiten 374-382, XP010128599 ISBN: 978-0-8186-3870-1

**Beschreibung**

Die Erfindung betrifft ein Verfahren zur Bestimmung des Abstandes R wenigstens eines im Raum befindlichen Objektes zu einer Bilderfassungsvorrichtung mit einem Bilderzeugungselement und einem Sensor, wobei der Sensor aus mehreren im wesentlichen flächig nebeneinander angeordneten Sensorelementen besteht, das Bilderzeugungselement wenigstens einen Teil des Raumes auf den Sensor abbildet - Raumabbild -, wobei ein von dem Bilderzeugungselement unter einem bestimmten Ablagewinkel $\alpha$ erfaßter Raumteil auf ein bestimmtes Sensorelement abgebildet wird und von den Sensorelementen entsprechende Sensorelementsignale erzeugt werden. Darüber hinaus betrifft die Erfindung auch eine Vorrichtung zur Bestimmung des Abstandes zu wenigstens einem im Raum befindlichen Objekt, mit einem Bilderzeugungselement, einem Sensor und einer Signalverarbeitungseinheit, wobei der Sensor aus mehreren im wesentlichen flächig nebeneinander angeordneten Sensorelementen besteht, von dem Bilderzeugungselement wenigstens ein Teil des Raumes auf den Sensor abbildbar ist - Raumabbild -, wobei ein von dem Bilderzeugungselement unter einem bestimmten Ablagewinkel $\alpha$ erfaßbarer Raumteil auf ein bestimmtes Sensorelement abbildbar ist und von den Sensorelementen entsprechende Sensorelementsignale erzeugbar sind.

Auf dem Gebiet der Meßtechnik, insbesondere auch im industriellen Anwendungsbereich auf dem Gebiet der Prozeßmeßtechnik, sind seit längerem diverse Verfahren bekannt, die sich mit der Bestimmung des Abstandes von einem Objekt zu einer Bilderfassungsvorrichtung im weitesten Sinne befassen. Die Verfahren machen sich ganz unterschiedliche physikalische Effekte zu Nutze, sind in ihrer technischen Umsetzung mit sehr unterschiedlichem Aufwand verbunden und an unterschiedliche Randbedingungen der Umgebung geknüpft.

Wenn hier von einem Verfahren die Rede ist, das der Bestimmung des Abstandes R "wenigstens eines im Raum befindlichen Objektes" zu einer Bilderfassungsvorrichtung dient, dann ist damit nicht einschränkend gemeint, daß nur die Abstände zu bestimmten Objekten des Raumbildes erfaßt werden, vielmehr ist das Verfahren auch anwendbar auf die Erfassung einer Vielzahl von Abstandinformationen, die das gesamte Raumbild abstandsmäßig beschreiben, jedenfalls soweit es die Auflösung der zugrundeliegenden gerätetechnischen Ausstattung ermöglicht. Die Bezugnahme auf den Abstand eines Objektes erleichtert hier lediglich die Erläuterung des betrachteten Verfahrens.

Wenn davon die Rede, daß das Bilderfassungselement den Raum auf den Sensor abbildet, dann mag darunter zunächst einschränkend die optische Abbildung von sichtbarem Licht verstanden werden. Selbstverständlich ist dies keine Einschränkung, es kann sich um beliebige elektromagnetische Strahlung handeln, insbesondere auch solche im Terahertz-Bereich. Selbst der Einsatz akustischer Bilderfassungsvorrichtungen ist denkbar.

Ein weit verbreitetes bekanntes Verfahren zur Abstandsbestimmung ist beispielsweise die Triangulation, mit der üblicherweise aber nur der Abstand eines Objekts erfaßt werden kann, das sich in genau einer bestimmten Richtung von der Bilderfassungsvorrichtung befindet. In genau dieser Richtung wird von der aktiven Meßvorrichtung beispielsweise ein Lichtstrahl emittiert, der von dem Objekt zumindest teilweise reflektiert wird. Von einer seitlich um die optische Basis gegenüber der Lichtquelle versetzten Empfangseinrichtung wird das sogenannte Triangulationsdreieck aus dem Sendestrahl, dem Empfangsstrahl und der gegebenen optischen Basis gebildet. Mit der optischen Basis und den beiden meßbaren Schenkelwinkeln von Sende- und Empfangslichtstrahl ist das Dreieck vollständig bestimmt. Diese Abstandsmeßtechnik wird in Variationen in der Praxis vielfältig angepaßt und z. B. durch das Streifenprojektionsverfahren auch für die dreidimensionale Objektvermessung angewendet. Das Triangulationsdreieck behindert allerdings oft den freien Meßzugang, verursacht bei kleinen Dreieckswinkeln große Fehler und erlaubt so nur begrenzte relative Entfernungen und schränkt den optischen Sichtbereich bezüglich größerer Raumwinkel ein.

Andere Verfahren bedienen sich des stereometrischen Effekts, der ebenfalls auf Triangulation beruht, wobei die erfaßbaren Objektabstände hier sehr stark von dem - meist sehr begrenzten - Abstand der Stereobildsoren abhängen und die Auswertung von Stereobildern einer vergleichsweise aufwendigen nachgelagerten Signalverarbeitung bedürfen.

Stereokamerasysteme für die dreidimensionale Objekterfassung mit passiver Beleuchtung haben vielfach bei der schnellen dreidimensionalen Erfassung in natürlichen Umgebungen mit diversen Problemen zu kämpfen. Beispielsweise müssen korrespondierende Bildelemente bzw, Pixelcluster in den beiden Projektionsbildem zunächst identifiziert werden, um über die zwei Richtungswinkel der zugehörigen Empfangsstrahlen der optischen Kamerabasis zum korrespondierenden Bildelement das Triangulationsdreieck und damit den Abstand zu ermitteln (Korrespondenzproblem). Das ist ohne eindeutige Bildmerkmale, die z. B. bei einer regelmäßigen Textur fehlen, nicht möglich, weshalb ggf. eine geeignete künstliche strukturierte Beleuchtung ergänzt werden muß. Ein anderes Problem besteht darin, daß aus den verschiedenen Blickwinkeln eines Stereokamerasystems oft der dreidimensionale optische Fluß und der gesuchte dreidimensionale Bewegungsfluß nicht übereinstimmen, so daß die Korrespondenzen nicht ermittelt werden können (Divergenzproblem). Zusätzlich verursachen hohe Winkelgeschwindigkeiten bei der dynamischen dreidimensionalen Bilderfassung eine entsprechend beeinträchtigte Bildqualität, die bezüglich Zeit- und Berechnungsanforderungen oft nicht auswertbar sind. Stereobilder stellen ferner hohe Anforderungen an die Raumbildqualität und weisen daher häufig recht ungleichmäßige und unzureichende Raumpunktdichten auf Hinzu kommen Probleme der hochgenauen Kalibrierung der Pose von Stereokameras, für die WO 2006/069978 A2 "Verfahren und Vorrichtung zum Ermitteln eines Kalibrierparameters einer Stereokamera" eine Lösung vorschlägt.

Aus der US 6,535,114 B1 ist ein Verfahren zur Abstandsbestimmung bekannt, bei dem von einem sich nähernden Objekt mit einer Kamera eine Bildsequenz aufgenommen wird. In den verschiedenen Bildern der Sequenz muss das Objekt durch Formerkenungsalgorithmen fortlaufend detektiert werden. Aus den Bilddaten werden Informationen über die Struktur des Objektes detektiert und Bewegungsinformationen des Objektes ermittelt. Die Objekterkennung über Formerkennungsalgorithmen ist extrem zeitaufwändig und die Anforderungen an die Raumbildqualität sind sehr hoch. Ein ähnlicher Ansatz wird in dem Aufsatz "MonoSLAM: Real-Time Single Camera SLAM" von A. J. Davison, I. D. Reid, N, D. Molton und O. Stasse (IEEE Transactions on Pattern Analysis and Machine Intelligence, Vol. 29, No. 6, June 2007) beschrieben, bei dem die Erkennung von Landmarken in einer bildlich erfassten Szene durch Prädiktion des neu erwarteten Ortes der Landmarke in einem neuen Bild beschleunigt wird.

Unter "Raumbild" oder "3D-Bild" wird hier und im folgenden das tatsächliche dreidimensionale Bild des Raumes verstanden. Im Unterschied dazu wird daszweidimensionale - Abbild des Raumbildes, das beispielsweise durch ein Bilderzeigungselement - z. B. Blende und/oder Optik - aus dem Raumbild erhalten wird, als "Raumabbild" bezeichnet.

Andere bekannte Verfahren beruhen auf der Auswertung von Laufzeiten eines Signals, z.B. einem sinusförmig oder pulsförmig modulierten optischen Signal, das von einer Meßvorrichtung emittiert, von dem zu erfassenden Objekt reflektiert und von der Meßvorrichtung wieder empfangen wird, wobei unter der Voraussetzung einer bekannten Signalausbreitungsgeschwindigkeit der Objektabstand anhand der gemessenen Signallaufzeit ermittelbar ist. Eindimensionale Laufzeitmeßgeräte können als sog. Laserscanner durch zweidimensionales Scannen des Meßstrahls bei entsprechendem Zeitaufwand Raumbilder aufnehmen.

Wieder andere Verfahren basieren auf der Interferometrie, einem Laufzeitmeßverfahren durch Überlagerung von kohärenten Signalen, nämlich einerseits des emittierten Signals, das beispielsweise aus kohärenter Laserstrahlung besteht, und andererseits der von dem Objekt reflektierten Strahlung im gleichen Detektor. Aufgrund der grundsätzlichen Problematik in halber Wellenlänge mehrdeutiger Meßergebnisse wird die Interferometrie hauptsächlich zur sehr genauen Messung von Objektabständen - meist als Mehrfrequenzverfahren - in einer statischen Szenerie verwendet; bewegte Objekte bzw. eigenbewegte Bilderfassungsvorrichtungen erschweren die Abstandsbestimmung zusätzlich.

Bei anderen werden Verfahren Phasenlaufzeit- oder Pulslaufzeitdifferenzen parallel im Raummultiplexverfahren durchgeführt. Durch parallele modulierte Beleuchtung einer dreidimensionalen Szene und deren Abbildung auf einer Matrix von Laufzeitdetektoren, z.B. einer PMD(Photonenmischdetektor)-Matrix, und durch parallele Mischung und Korrelation des ausgesendeten und der am Objekt reflektierten Signale können Zehntausende von Objektabständen parallel ermittelt werden, wie in der WO 9810255 beschrieben. Auch hier stellt sich das Problem, daß bei hohen Signalausbreitungsgeschwindigkeiten und geringen Objektabständen sehr geringe Verzögerungen des Empfangssignals zu detektieren sind, um eine Abstandsbestimmung vornehmen zu können; nicht selten liegen die aufzulösenden Zeitintervalle im Bereich von Nano- oder Pikosekunden mit den damit verbundenen hohen Anforderungen an die Meßtechnik.

Das bei der 3D-PMD-Kamera angewandte Verfahren der Photonenmischung im PMD-Pixel mischt das elektrische Sendermodulationssignal mit dem optischen Empfangssignal unter Auswertung extrem kurzer Signalverzögerungen hardwaremäßig mittels der sog. PMD-Ladungsschaukel und liefert je PMD-Pixel neben der Intensität ein Volumenelement bzw. ein Voxel des Raumbildes. Nachteilig bei dieser bekannten Realisierung einer 3D-Kamera ist ein hoher technischer Aufwand, vor allem die spezielle aktive Beleuchtung der Objekte, die begrenzte Reichweite, die speziell als Photonenmischdetektoren ausgestalteten Sensorelemente zur Abstandsbestimmung und das störende Umgebungslicht, das bei schwacher Remission die Reichweite zusätzlich einschränkt.

Im Ergebnis ist festzustellen, daß bekannte Verfahren zur Bestimmung eines Objektabstandes bzw. mehrerer Objektabstände entweder zwar vergleichsweise einfach durchführbar sind (Triangulation), dann jedoch nur einen beschränkten Einsatzbereich haben oder aber bekannte Verfahren in einem weiten Bereich einsetzbar sind (3D-PMD-Kamera), dann aber technologisch vergleichsweise aufwendig zu realisieren sind.

Der Lehre der vorliegenden Erfindung liegt daher das Problem zugrunde, ein Verfahren und eine Vorrichtung zur Verfügung zu stellen, die mit einfachen technischen Mitteln eine umfassende und vorzugsweise schnelle Erfassung von Objektabständen ermöglichen, insbesondere in einem großen Teil des von der eingesetzten Bilderfassungsvorrichtung erfaßten Raumes. Es soll für den großen Anwendungsbereich dynamischer dreidimensionaler Meßaufgaben geeignet sein.

Das erfindungsgemäße Verfahren, bei dem die zuvor hexgeleitete und aufgezeigte Problemstellung gelöst ist, ist zunächst und im wesentlichen dadurch gekennzeichnet, daß die Relativgeschwindigkeit v der Bewegung der Bilderfassungsvorrichtung zu dem Objekt - oder, gleichbedeutend, des Objektes zur Bilderfassungsvorrichtung - ermittelt wird, daß durch Auswertung der Sensorelementsignale wenigstens zweier Sensorelemente - nachfolgend auch Voxel genannt - eine Raumabbildwinkelgeschwindigkeit $\omega_{mes,sensor}$ ermittelt wird und daß aus der Raumabbildwinkelgeschwindigkeit $\omega_{mes,sensor}$ des auf die Sensorelemente abgebildeten Objekts die orthogonale Objektwinkelgeschwindigkeit $\omega_{mes}$ des von der Bilderfassungsvorrichtung auf das Objekt weisenden Objektabstandsvektors gewonnen wird und über die Relativgeschwindigkeit v der Bilderfassungsvorrichtung, über die orthogonale Objektwinkelgeschwindigkeit $\omega_{mes}$ und über den Ablagewinkel $\alpha$ des Objekts der Objektabstand R ermittelt wird.

Zur Erläuterung des erfindungsgemäßen Verfahrens sei zunächst angenommen, daß sich die Bilderfassungsvorrichtung, bei der es sich im Falle von lichtempfindlichen Sensorelementen um eine gewöhnliche Kamera mit einem CMOS-Chip - vorzugsweise mit erweiterter Frannegrabberausstattung und vielfältigen Auswertungsmöglichkeiten lokaler (Voxel bezogener) Raumabbildwinkelgeschwindigkeiten mit einem üblichen Linsenaugenobjektiv gegenüber dem alternativ möglichen Facettenaugenobjektiv - handeln kann, geradlinig oder zumindest stückweise geradlinig mit einer bestimmten Geschwindigkeit $v_{tr}$ durch den Raum bewegt, wobei die Bilderfassungsvorrichtung mit ihrer optischen Achse in beliebige Richtungen, z.B. bei Straßenfahrzeugen vor allem in die Richtung des Frontbereichs der stückweise geradlinigen, also translatorischen Bewegung zeigt.

Eventuell auftretende Rotationen, z.B. Kurvenfahrt von Fahrzeug und montierter Bilderfassungsvorrichtung müssen bezüglich jeder Abstandsmessung ermittelt werden und vorzugsweise je Meßintervall durch optisch-mechanische oder rechnerische Kompensation fortlaufend eliminiert werden. Die zumindest stückweise als reine Translation modellierte Bewegung der stückweise annähernd konstanten Geschwindigkeit $v_{tr}$ legt in der Zwischenzeit, vorzugsweise der Abtastperiode $\Delta t$, die Strecke $\Delta L = v_{tr} \cdot \Delta t$ zurück.

Das Bilderzeugungselement, beispielsweise eine Linse oder auch nur eine Lochblende, stellt in seinem Erfassungsbereich eine eindeutige Beziehung zwischen einem Sensorelement des Sensors und einem bestimmten Ausschnitt des erfaßten Raumes her, der auf ein betreffendes Sensorelement abgebildet wird. Das gleiche gilt selbstverständlich auch für eine Gruppe von Sensorelementen - z. B. Voxel-, auch hier ist durch das Bilderzeugungselement eine eindeutige Beziehung gegeben zwischen der Sensorelementgruppe und einem bestimmten auf die Sensorelementgruppe durch das Bilderzeugungselement abgebildeten Raumbereich. Der Winkel, unter dem gemessen von der Achse der Bewegungsrichtung der Bilderfassungsvorrichtung ein im Raum befindliches Objekt erscheint, wird als Ablagewinkel bezeichnet. Wenn davon ausgegangen wird, daß die im Raum befindlichen Objekte ortsfest sind und eine Relativbewegung zwischen den im Raum befindlichen Objekten und der Bilderfassungsvorrichtung lediglich durch die Bewegung der Bilderfassungsvorrichtung in dem Raum zustande kommt, dann ziehen alle im Raum befindlichen Objekte auf parallelen Trajektorien in einem jeweils konstanten Objekttrajektorienabstand D zur Bewegungsachse an der bewegten Bilderfassungsvorrichtung vorüber; diese Trajektorien verlaufen also parallel zu der Trajektorie der bewegten Bilderfassungsvorrichtung.

Unendlich weit entfernte Objekte mit endlichem Objekttrajektorienabstand D entspringen aus der Sicht der Bilderfassungsvorrichtung zunächst aus einem Raumpunkt, der genau auf der Achse der Bewegungsrichtung der Bilderfassungsvorrichtung liegt - Ablagewinkel 0°-. Mit geringer werdendem Abstand des Objektes von der Bilderfassungsvorrichtung - verursacht durch die Relativgeschwindigkeit der Bewegung der Bilderfassungsvorrichtung zu dem Objekt - erscheint das Objekt, sofern es nicht genau auf der Achse der Bewegungsrichtung der Bilderfassungsvorrichtung liegt, unter einem immer größer werdenden Ablagewinkel. Es ist einleuchtend, daß sich der Ablagewinkel bei konstanter Relativgeschwindigkeit der geradlinigen Bewegung der Bilderfassungsvorrichtung mit abnehmendem Abstand immer weiter vergrößert, was gleichbedeutend ist mit einer zunehmenden Geschwindigkeit, mit der das Raumabbild des Objektes den Sensor überstreicht und mit entsprechend zunehmender Winkelgeschwindigkeit des verbindenden Radiusvektors mit zunächst unbekannter Länge.

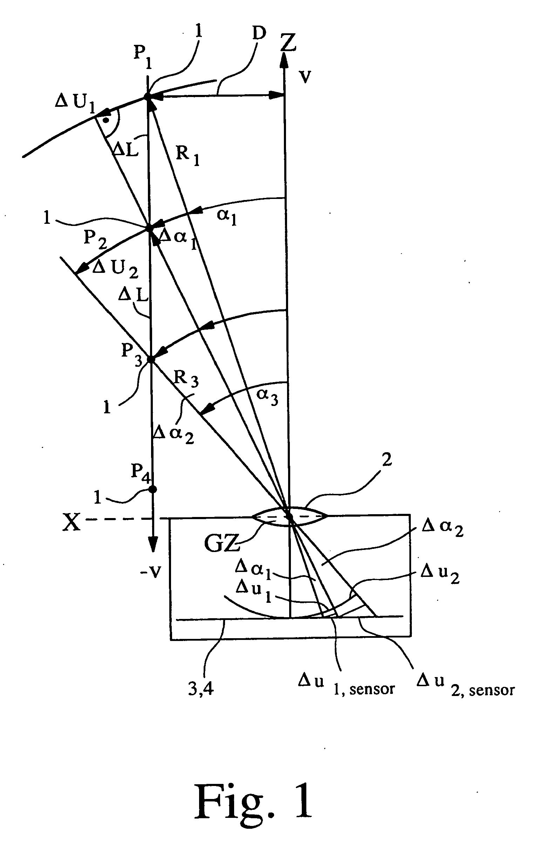

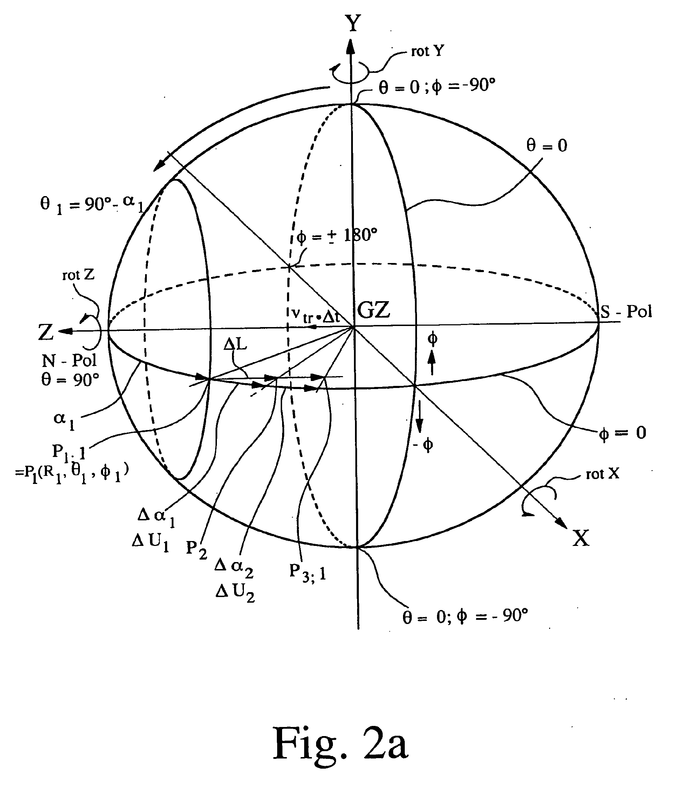

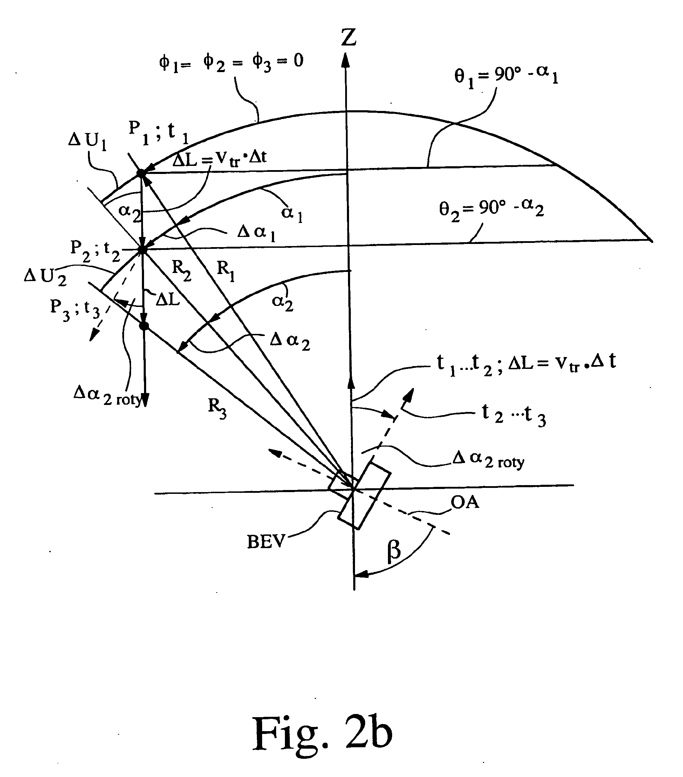

Zum besseren Verständnis der erfindungsgemäßen dreidimensionalen Vermessung von Objekten in Raum und Zeit mit einer nur zweidimensional aufnehmenden Bilderfassungsvorrichtung mittels der vorstehend beschriebenen relativen Bewegung $v_{tr}$ sowie mittels der durch $v_{tr}$ verursachten und zu vermessenden Objektwinkelgeschwindigkeit $\omega_{mes}$ des auf das Objekt weisenden Objektabstandsvektors bzw. Radiusvektors $\vec{R}$ ist eine anschauliche Beschreibung im Kamerakoordinatensystem KKS, im Weltkoordinatensystem WKS und im Sensorkoordinatensystem SKS vorteilhaft. Diese komplexen geometrischen und kinematischen Vorgänge werden aufgrund ihrer Bedeutung für die Funktion und Ausführung erfindungsgemäßer 3D-Kameras oder 3D-Videokameras in den nachfolgenden Figurenbeschreibung zu den Figuren 1, 2a und 2b noch näher erläutert. Insbesondere Figur 2a vereinfacht und veranschaulicht die Zusammenhänge beliebiger relativer Bewegungen der Bilderfassungsvorrichtung im Raum mit den drei möglichen Translationsrichtungen z.B. in X-, Y-, Z-Richtung und den drei möglichen Rotationen um die X-, Y-, Z-Achsen sowie der vorzugsweise jeweils in der Ausgangsposition einer Messung im Koordinatenzentrum positionierten Bilderfassungsvorrichtung.

Zur Veranschaulichung der Lehre der Erfindung und zur Vereinfachung der Berechnung der gesuchten raumzeitlichen relativen Objektabstände von der Bilderfassungsvorrichtung sowie zur Erzielung einer fortlaufenden, schnellen dreidimensionalen Objekterfassung auf Basis der Kreisbewegungsgleichung, wobei eine Folge kurzer translatorischer Bewegungsabschnitte der Bilderfassungsvorrichtung relativ zu einem Objekt als kurze Kreisbewegung modelliert wird, wird vorzugsweise wie folgt verfahren:

1. Die Lehre der Erfindung ermöglicht u. A. die fortlaufende schnelle dreidimensionale Objekterfassung auf Basis einer gewöhnlichen digitalen 2D-Kamera und durch eine geeigneten Auswertung der bekannten Kreisbewegungsgleichung, hier als Vektorgleichung $\vec{v} = \vec{\omega} \times \vec{R}$, bei der das Vektorprodukt $\vec{\omega} \times \vec{R}$ jeweils nur die zueinander orthogonalen Vektorkomponenten berücksichtigt und damit den hierzu wiederum orthogonalen Geschwindigkeitsvektor $\vec{v}$ bestimmt. Da bei der Kreisbewegung mit dem Radius R, der tangentiale Geschwindigkeit eines Punktes auf dem Kreis

$v = 2\pi R / T$ mit der Umlaufzeit T alle drei Vektoren senkrecht zueinander stehen, gilt für die Kreisbewegung auch die entsprechende Skalargleichung $v_{ort} = \omega_{ort} \cdot R_{ort}$. Sind die orthogonalen Größen $v_{ort}$ und $\omega_{ort}$ einer Kreisbewegungsgleichung ermittelt, so ist damit auch der gesuchte Radius $R = v_{ort} / \omega_{ort}$ bzw· der Objektabstand bestimmt. Durch die Erfassung einer Vielzahl von Objektabständen kann insgesamt ein 3D-Raumbild gewonnen werden.

2. Die Radiusvektoren, z.B. zu den Abtastzeitpunkten $t_{tast} = k \cdot \Delta t$ (k = 0, 1, 2, ...) je Voxel ermittelt, werden im rechtsdrehenden kartesischen Koordinatensystem als $\vec{R}(X, Y, Z)$ oder im Kugelkoordinatensystem bzw. geographischen Koordinatensystem als $\vec{R}(R, \theta, \Phi)$ bezeichnet und sind einander bekanntlich über eine entsprechende Transformationsmatrix eindeutig zugeordnet.

3. Die drei physikalisch möglichen relativen Rotationen der Bilderfassungsvorrichtung gegenüber einem Objekt im Raum werden als $\vec{\omega}_{rot}(\omega x, \omega_Y, \omega_Z)$ bezeichnet. Sie stören die Ermittlung der Objektabstände und müssen vermieden oder ermittelt und rechnerisch oder durch Bildstabilisierung kompensiert werden.

4. Die Pose und Bewegung der Bilderfassungsvorrichtung startet vorzugsweise vor jeder neuen Ermittlung des Objektabstandes im Zentrum des Kugelkoordinatensystems in der Z-Achsen-Ausrichtung und mit einer der Abtastperiode $\Delta t$ zugeordneten - vorgegebenen oder ermittelten - Translationsgeschwindigkeit $v_{tr}$. Nach der Auswahl jeweils des Voxel eigenen Ablagewinkels $\alpha$ - z. B. des der optischen Achse und zugleich des Sensormittelpunktes - und der Voxel eigenen Raumabbildwinkelgeschwindigkeit $\omega_{mes,sensor}$ auf der Sensorebene sowie ggf. der Kompensation einer relativen Rotation kann der durch mindestens ein Voxel gekennzeichnete Objektabstand als Radiusvektor einer Kreisbewegung berechnet werden.

5. Bei vorgegebenen und unvermeidlichen Rotationen der Bilderfassungsvorrichtung relativ zu den Objekten z.B. in Fahrzeugen oder in einer geführten Roboterhand sind diese z.B. mit Drehratensensoren dreidimensional zu vermessen. Sie können zu jeder Abtastperiode z.B. durch die bekannten Bildstabilisierungsverfahren optisch-mechanisch kompensiert oder rechnerisch eliminiert werden. Die Berechnungen von Translation und Rotation im beschriebenen Kamerakoordinatensystem KKS stellen Abweichungen gegenüber dem Weltkoordinatensystem WKS dar. Die Abweichungen werden vorzugsweise durch fortlaufende Nachführung und jeweilig korrigierten Start im WKS bis zu einer gewissen Genauigkeitsgrenze mit erneuter Kalibrierung z.B. mit Satellitennavigation (KKS-WKS-Matching) beseitigt.

6. Ein Radiusvektor $\vec{R}$ der zu einem beliebigen Objekt im Raum weist, bildet einen Ablagewinkel $\alpha$ mit der Z-Bewegungsachse der Bilderfassungsvorrichtung. Während der relativen Bewegung zwischen der Bilderfassungsvorrichtung und Objekt nähern oder entfernen sich beide gegensinnig auf parallelen Geraden zumindest für die Dauer einer Abtastperiode $\Delta t$ unter einem Ablagewinkel von z.B. $\alpha = 45°$ und einem Objekttrajektorienabstand D mit der Translationsgeschwindigkeit $v_{tr}$. Falls keine Rotation auftritt, wird nach vielen Schritten für $\alpha = 90°$ der kürzeste Abstand und die höchste (Pseudo-)Winkelgeschwindigkeit $\omega_{max} = v_{tr}/D$ erreicht sein, die danach für Z gegen minus Unendlich gegen Null strebt. Dabei sind Objekttrajektorienabstand D und Objektabstand R über $D = R \cdot \sin \alpha$ verknüpft.

7. Im geographischen Koordinatensystem - hier vorzugsweise auf einer Einheitskugel mit Radius 1 zur Berechnung des unbekannten Radius R - befindet sich ein Objekt zunächst aus der Sicht einer Lochkamera am Punkt $P_1(\theta_1, \Phi_1)$ auf der Kugeloberfläche mit beliebigem Längengrad $\Phi_1$ und beliebigem Breitengrad $\theta_1$ sowie unter einem zugehörigen Ablagewinkel $\alpha_1$ zur Bewegungsachse der Bilderfassungsvorrichtung in der Ausgangsposition Kugelzentrum bzw. geographisches Zentrum GZ. Zur Beschreibung und Berechnung des folgenden Bewegungsschrittes mit Raumabtastung während der Abtastperiode $\Delta t$ wird diese dreidimensionale Aufgabenstellung vorzugsweise auf eine zweidimensionale reduziert, indem nur die jeweils betroffene Längenkreisebene betrachtet wird. Da dieser Bewegungsschritt von einem durch das Bilderzeugungselement einander zugeordnetem Sensorkoordinaten- und Raumkoordinatenpaar $p_1(x_1, y_1)$ und $P_1(\theta_1, \Phi_1)$ zum nächsten Paar $p_2(x_2, y_2)$ und $P_2(\theta_2, \Phi_2)$ sich immer in einer bestimmten Längenkreisebene mit $\Delta\Phi \sim 0$ abspielt, können alle Längenkreisebenen Schicht für Schicht für alle zugehörigen Breitegrad- bzw. $\alpha$-Werte in der ganzen Sensorebene bzw. im zugehörigen Raumwinkelbereich zur Bestimmung der Objektabstände bzw. Radiusvektorlängen mit jeweils $\Phi$ = Konstante und $\alpha$ bzw. $\theta$ als Laufparameter abgearbeitet werden. Dabei sind die Koordinaten eines Paares einander z.B. über eine Transformation oder besser eine Tabelle zur schnellen Berechnung fest zugeordnet. Breitengradwinkel $\theta$ und Ablagewinkel $\alpha$ sind allgemein über $\theta = 90° - \alpha$ bzw. für Änderungen über $\Delta\theta = - \Delta\alpha$ direkt verknüpft während $\Delta\Phi \sim 0$ gilt.

8. Bei der vorangehenden und der nachfolgenden Betrachtung der Projektion des Objektraumes auf eine Sensorfläche mit z.B. einer Pixelmatrix $p(x, y)$ im Sensorkoordinatensystem wird zunächst von Winkelverzerrungen abgesehen, was in der Nähe der optischen Achse herkömmlicher Kameras und bei konkav sphärischen Sensoroberflächen - angepaßt z.B. an eine modellhafte Lochkamera - berechtigt ist. In diesem Fall werden Winkel und Winkelgeschwindigkeiten - zunächst bis zur Beschreibung von Gleichung (2) - als unverzerrt betrachtet.

9. Bei der benannten Abbildung durch das Bilderzeugungselement gehen die Tiefeninformationen zunächst vollständig verloren. Da in der Praxis die Änderungen der Radiusvektoren $\vec{R}$ durch relativ kleine Translationsschritte $\Delta L = v_{tr} \cdot \Delta t$ gegenüber dem Radius R aus der Sicht der Bilderfassungsvorrichtung nur als Winkeländerungen $\Delta\theta$ und $\Delta\Phi$ bzw. als Winkelgeschwindigkeiten $\vec{\omega}_{PR}(d\Phi/dt, d\theta/dt)$ bzw. $\omega_{PR}(\omega_X, \omega_Y, \omega_Z)$ abgebildet werden, werden diese hier als Pseudo-Rotationen $\omega_{PR}$ benannt, da keine physikalischen Rotationen zugrunde liegen. Damit darf der Radius bzw. Objektabstand erfindungsgemäß nach der Kreisbewegungsgleichung berechnet werden.

10. Diese Näherung bedeutet im Einzelnen, daß die Bilderfassungsvorrichtung nur den projizierten orthogonalen Teil des Translationsschrittes $\Delta L_{ort} = v_{ort}\Delta t = \Delta L \cdot \sin\alpha = v_{tr} \cdot \sin\alpha \cdot \Delta t$ als Winkeländerung $\Delta\alpha$ bzw. als projizierten Teilumfang $\Delta U = \Delta\alpha \cdot R$, d.h. als Teil des Gesamtumfangs $U = 2\pi \cdot R$ erfaßt. Damit wird näherungsweise die Kreissehne $\Delta L_{ort}$ dem zugehörigen Kreisbogen $\Delta U$ gleichgesetzt, wobei Winkeländerungen $\Delta\alpha$ bis in den Bereich 20°,30° bis 50° nur geringe Fehler von 0,51 %, 1.15% bis 3,2% erzeugen. Mit dieser Gleichsetzung gilt $\Delta U = \Delta L_{ort}$ bzw. $R = v_{ort} \cdot \Delta t$ und damit $R = v_{ort} \cdot \Delta t /\Delta\alpha = v_{tr} \cdot \sin \alpha / \omega_{ort}$.

11. Die Lehre der Erfindung besteht wesentlich darin, unter den komplexen Randbedingungen in relativ einfacher Weise die für die Messung der Objektabstände der Umgebung hergeleiteten notwendigen Größen zu bestimmen:

a) Der Ablagewinkel $\alpha$ des Objekts wird aus der Sicht der Bilderfassungsvorrichtung vorzugsweise zunächst für die optische Achse OA des Bilderzeugungselements und des Raumabbildes der Sensorabbildung auf der Einheitskugel mit $\theta_0 = 90° - \alpha_0$ und als Schnittpunkt des Zentralbreitenkreises $\theta_0$ und des Zentrallängenkreises $\Phi_0$ dieser Sensorabbildung bestimmt. $\Phi_0$ wird vorzugsweise zugleich als Nullmeridian des geographischen Koordinatensystems festgelegt. Für die Berechnung aller Objektabstände im Bilderfassungsbereich werden die Konstanz der $\alpha$-Werte auf den Breitengraden und die Konstanz der ($\Phi$-Werte in allen Längenkreisebenen zur schnellen Berechnung genutzt.

b) Die translatorische Geschwindigkeit $v_{tr}$ gilt für alle Objekte gleichermaßen. Sie kann sowohl seitens der Bilderfassungsvorrichtung z.B. im Transportfahrzeug als auch durch bewegte Objekte z.B. auf einem Transportband vorgegeben sein oder - falls nicht - werden entsprechende Messungen durchgeführt. Aufgrund der Projektion der Objekte auf die Sensorfläche wirkt sich die radiale Komponente $\Delta R = \Delta L \cdot \cos \alpha$, die die Länge des Radiusvektors $\vec{R}$ ändert, im Raumabbild gar nicht aus.

c) Die Bestimmung der Raumabbildwinkelgeschwindigkeiten $\omega_{mes,sensor}$ auf der Sensorfläche bzw. im Bilderfassungsbereich ist die wesentliche Meßaufgabe. Auf einem Sensor mit einer Vielzahl von Sensorelementen und Voxeln kann eine Vielzahl von Raumabbildwinkelgeschwindigkeiten $\omega_{mes,sensor}$ bestimmt werden, jede Raumabbildwinkelgeschwindigkeit $\omega_{mes,sensor}$ für ihren korrespondierenden Raumabschnitt. Aus der bzw. jeder einzelnen Raumabbildwinkelgeschwindigkeit $\omega_{mes,sensor}$ kann dann einfach die Objektwinkelgeschwindigkeit $\omega_{mes}$ ermittelt werden. Wie gezeigt, liefert die Projektion z.B. einer 2D-Kamera mit $\omega_{ort} = \omega_{mes}$ direkt - bis auf die leicht zu entzerrende $\cos \alpha_{ax}$-Winkelverzerrung für Objekte mit einer Projektionsablage $\alpha_{ax}$ von der optischen Achse, die in den Längenkreisebenen mit dem zuvor definierten Ablagewinkel $\alpha$ übereinstimmt. Wie die Raumabbildwinkelgeschwindigkeiten $\omega_{mes,sensor}$ auf der Sensorfläche tatsächlich ermittelt werden - beispielsweise durch Objektverfolgung mittels Korrelationsverfahren oder andere geeignete Verfahren-, ist für den allgemeinen Erfindungsgedanken unerheblich. Jedoch zeigt sich, daß an die Messung und Auswertung der Winkelgeschwindigkeiten der Bildverschiebung zwischen den Abtastperioden $\Delta t$ besondere Anforderungen gestellt werden, die von vielen in der Literatur beschriebenen Verfahren nicht erfüllt werden. Daher werden in nachfolgend beschriebenen Weiterentwicklungen der Erfindung neuartige Auswerteverfahren vorgeschlagen.

Zusammengefaßt: Unter den beschriebenen Randbedingungen wird nur eine solche Bewegungskomponente des sich relativ zur Bilderfassungsvorrichtung nähernden Objektes von dem Sensor bzw. Sensorelement erfaßt, die senkrecht bzw. orthogonal zum Radiusvektor $\vec{R}$ steht, sich also als Änderung des Ablagewinkels $\alpha$ verhält, unter dem das Objekt gesehen wird. Daher wird von dem Sensorelement der Bilderfassungsvorrichtung die translatorische Relativgeschwindigkeit der Bewegung der Bilderfassungsvorrichtung $v_{tr}$ nur mit deren orthogonalen Betragsanteil $v_{tr} \cdot \sin\alpha = v_{ort}$ wahrgenommen. Für den relativ kleinen Bewegungsabschnitt $v_{ort} \cdot \Delta t = \Delta U$ kann dieser bekannte Abschnitt auf dem Längenkreisumfang mit noch unbekanntem Radius R aufgetragen werden. Mit $\sin \Delta\alpha_{mes} = \Delta U/R$ und näherungsweise $\sin \Delta\alpha_{mes} \sim \Delta\alpha_{mes}$ bei einer entsprechend hohen Bildrate ergibt sich $\Delta U = R \cdot \Delta\alpha_{mes}$. Gleichzeitig hat sich durch den relativen Translationsschritt der Ablagewinkel $\alpha$ um ein entsprechendes unbekanntes $\Delta\alpha_{mes} / \Delta t = \omega_{mes}$ geändert. Über

diese Bestimmungsgleichungen folgt direkt die hier anwendbare allgemeine skalare Kreisbewegungsgleichung $v_{ort}$ = $\omega_{ort} \cdot R$ und speziell hier die Gleichung (1) zur Bestimmung des unbekannten Objektabstandes. Erfindungsgemäß wird der Zusammenhang gemäß Gleichung 1 zwischen dem Abstand R des im Raum befindlichen Objektes zu der Bilderfassungsvorrichtung, der translatorischen Relativgeschwindigkeit der Bewegung der Bilderfassungsvorrichtung zu dem Objekt $v_{tr}$, dem Ablagewinkel $\alpha$ des Objektes zu der Achse der translatorischen Bewegungsrichtung der Bilderfassungsvorrichtung und der - aus der auf dem Sensor als Raumabbildwinkelgeschwindigkeit $\omega_{meß,sensor}$ erfaßten und daraus abgeleiteten - gemessenen Objektwinkelgeschwindigkeit $\omega_{meß}$ verwendet, um den Objektabstand R zu ermitteln:

$$R = \frac{v_{ort}}{\omega_{ort}} = \frac{v_{tr} \cdot \sin \alpha}{\omega_{mes}}. \qquad (1)$$

Unter den zuvor beschriebenen Randbedingungen geht die zu messende Objektwinkelgeschwindigkeit $\omega_{mes}$ ausschließlich auf die translatorische Relativgeschwindigkeit der Bewegung der Bilderfassungsvorrichtung zurück, da es eine andere Bewegungskomponente nicht gibt. Erfindungsgemäß wird der Zusammenhang gemäß Gleichung 1 zwischen dem Abstand R des im Raum befindlichen Objektes zu der, der translatorischen Relativgeschwindigkeit der Bewegung der Bilderfassungsvorrichtung zu dem Objekt $v_{tr}$, dem Ablagewinkel $\alpha$ des Objektes zu der Achse der translatorischen Bewegungsrichtung der Bilderfassungsvorrichtung und der auf dem Sensor als Raumabbildwinkelgeschwindigkeit erfaßten gemessenen Objektwinkelgeschwindigkeit verwendet, um den Objektabstand R zu ermitteln.

Ein großer Vorteil dieses Verfahren besteht darin, daß zur Abstandsbestimmung nur Geschwindigkeiten gemessen werden müssen, die Objektwinkelgeschwindigkeit $\omega_{mes}$ - resultierend aus der Raumabbildwinkelgeschwindigkeit $\omega_{mes,sensor}$ der auf den Sensor abgebildeten Objekte - und die relative translatorische Kamerageschwindigkeit $v_{tr}$ gegenüber den Objekten.

Damit sind absoluten Geschwindigkeiten keine prinzipiellen Grenzen gesetzt. Die Einfachheit und Leistungsfähigkeit des Verfahrens werden deutlich durch den Insektenflug z.B. der Libellen und unser schnelles Autofahren, bei dem die geringe Reichweite unseres Stereosehens nur einen Bruchteil eines evtl. erforderlichen Bremswegs ausmacht. Alle bedienen sich dieses Prinzips des schnellen 3D-Sehens, wobei die eindimensionale Gleichung 1 erfindungsgemäß in dreidimensionales technisches Sehen umgesetzt werden kann.

Auf der Basis von Gleichung 1 und ihrer erfindungsgemäßen dreidimensionalen Anwendung besteht die Möglichkeit, mit einfachen Mitteln - im Wesentlichen mit einer 2D-Digitalkamera oder 2D-Videokamera - räumliche Objekte dynamisch mit relativ hoher 3D-Bildrate (Kamera abhängig) zu vermessen - quasi als 3D-Videokamera. Damit wird z.B. ein Autonom Mobiler Roboter mit mindestens einer erfindungsgemäßen Bilderfassungsvorrichtung und Auswertung - vorzugsweise als rundum schauendes 3D-Videokamerasystem - selbständig navigieren können, wobei mit Hilfe der abschnittsweise gemessenen translativen Fahrgeschwindigkeit, abschnittsweise gleichzeitiger Messung und Kompensation der unvermeidlichen Rotationsbewegungen und laufender Nachführung des Kamerakoordinatensystems im Weltkoordinatensystem autonomes Fahren mit minimalem Aufwand ohne aktive Beleuchtung ermöglicht wird.

Zur technischen Umsetzung des erfindungsgemäßen Verfahrens sind bzgl. des Bilderzeugungselements und des Sensors folgende Aspekte zu berücksichtigen. Wenn das Bilderzeugungselement das Raumbild durch ein Objektiv abbildet, entsteht eine Vielzahl von Abbildungsfehlern. Heute werden praktisch nur noch korrigierte Objektive eingesetzt, deren geometrische Verzeichnungen oft vernachlässigbar sind, wenn die Abbildungsfehler nur noch in den Randbereichen Fehler von z.B. 2% erreichen. Diese Präzision vermeidet jedoch nicht die perspektivischen Verzerrungen von Winkeln und der gesuchten Winkelgeschwindigkeit $\omega_{mes} = \omega_{ort}$ auf der üblich ebenen Sensorebene bei schrägem Lichteinfall auf dem Sensor. Dieser Fehler tritt nahe der optischen Achse kaum und durch die sphärisch angepaßte Sensoroberfläche, wie zuvor beschrieben, nicht auf. Da der Fehler auf dem speziellen Sensor beruht, wird die auf dem Sensorelement verfälschte Objektwinkelgeschwindigkeit, also die Raumabbildwinkelgeschwindigkeit, mit $\omega_{mes,sensor}$ bezeichnet. Auf dem ebenen Sensor ist die Winkelablage auf der Pixelmatrix des Sensors von der optischen Achse OA $(x_0, y_0)$ ebenso wie im Raum von der optischen Achse $OA(\theta_0, \Phi_0)$ bzw. $OA(\alpha_0, \Phi_0)$ bzw. auf der geographischen Einheitskugel durch den Ablagewinkel $\alpha$ des jeweils objektbezogenen Längenkreises bestimmt. Dieser Fehler kann mit sehr guter Näherung durch $\omega_{mes,sensor} = \omega_{mes}/\cos \alpha$ beschrieben werden. In diesem Fall tritt Gleichung 2 anstelle Gleichung 1 mit $\omega_{mes} = \omega_{mes,sensor} \cdot \cos \alpha$:

$$R = \frac{v_{tr} \cdot \sin \alpha}{\omega_{meß,sensor} \cdot \cos \alpha} = \frac{v_{tr} \cdot \tan \alpha}{\omega_{meß,sensor}} \qquad (2)$$

Jeder hier betrachtete Bewegungsabschnitt der Bilderfassungsvorrichtung weist vom geographischen Zentrum GZ aus vorzugsweise Richtung Nordpol bzw. Z-Achse. Für den Fall, daß die optische Achse OA der Bilderfassungsvorrichtung gegenüber dieser Bewegungsachse und damit auch die Sensorebene um einem Winkel $\beta$ geneigt ist, gilt für den achsennahen Bereich des Objektivs $\beta \sim a$ auch eine entsprechend geringe Verzeichnung in der Nähe der optischen Achse. Gleiches gilt für alle Längengradpunkte im Sichtbereich, die auf dem gleichen Breitengrad $\theta = 90° - \alpha$ bzw. Ablagewinkel liegen. Für $\beta = 90°$ liegt der Bilderfassungsbereich mit den geringsten Verzerrungen im Bereich der höchsten Winkelgeschwindigkeit und damit auch der höchsten Meßgenauigkeit. Die zugleich erforderliche hohe Abtastrate der Bildaufnahme ist entsprechend aufwendig und kann z.B. von unserem Auge bei der unmittelbaren Passage eines Straßenbaums beim Autofahren nicht erfüllt werden. Für die Schätzung der Verzerrungen ist jetzt die Größe der Breitengradwinkelabweichung zwischen dem Breitengrad der optischen Achse und dem betrachteten Voxel oder Objekt verantwortlich. Dieser Zusammenhang der entzerrenden Wirkung der Achsausrichtung auf den Bildinteressensbereich wird in Gleichung (3) - auch unter Bezug der zu Gl. (2) aufgeführten Anmerkungen - berücksichtigt.

$$R = \frac{v_{tr} \cdot \sin\alpha}{\omega_{me\beta,sensor} \cdot \cos(\alpha - \beta)} \qquad (3)$$

Vor einer Auswertung der später beschrieben schrittweise abgetasteten Sensorelementsignale bzgl. der gesuchten Winkelgeschwindigkeiten $\omega_{mes}$ können vorzugsweise die in Gleichung 2 näherungsweise berücksichtigten Verzerrungen der Winkelabbildung durch eine der bekannten zweidimensionalen Bildtransformationen so entzerrt werden, daß die kartesisch beschriebenen Pixel- und Voxelstrukturen weitgehend unverzerrte Winkelverhältnisse repräsentieren. Gleiches gilt analog für die Entzerrung der nachfolgend beschriebenen hexagonalen Hexel- und Voxelstrukturen.

Die Raumabbildwinkelgeschwindigkeit $\omega_{mes,sensor}$ kann - wie erwähnt - mit ganz unterschiedlichen Verfahren durch Auswertung der Sensorelementsignale gewonnen werden.

Nach einer bevorzugten Ausgestaltung der Erfindung wird die Raumabbildwinkelgeschwindigkeit $\omega_{mes,sensor}$ - aus der letztlich die interessierende Objektwinkelgeschwindigkeit $\omega_{mes}$, ableitbar ist - ermittelt, indem durch geeignete Gewichtung der Sensorelementsignale wenigstens zweier Sensorelemente - Voxel - in wenigstens einer Sensorrichtung ein Ortsfrequenzfilter gebildet wird, wobei das Ortsfrequenzfilter mindestens die Sensorelementsignale des Voxels einer Ortsfrequenzfilterung in wenigstens zwei verschiedenen Ortsfrequenzfilterphasen $\varphi_0$, $\varphi_{90}$ unterzieht, und aus den erhaltenen korrespondierenden Ortsfrequenzfilterkomponenten $A_0$, $A_{90}$ eine Raumabbildphase $\varphi$ des Voxels ermittelt wird, und indem durch zeitliche Signalabtastung des Ortsfrequenzfilters wenigstens zwei Raumabbildphasen $\varphi$ des Voxels ermittelt werden und aus den zeitlich beabstandeten Raumabbildphasen $\varphi$ die Raumabbildwinkelgeschwindigkeit $\omega_{mes,sensor}$ ermittelt wird. Es ist zu berücksichtigen, daß sich die interessierende Raumabbildwinkelgeschwindigkeit $\omega_{mes,sensor}$ proportional zur zeitlichen Ableitung der Raumabbildphase verhält und sich daher - je nach den realisierten geometrischen Verhältnissen - ohne weiteres aus der zeitlichen Ableitung der Raumabbildphase gewinnen läßt. Durch das Ortsfrequenzfilter ist eine Ermittlung der Raumabbildwinkelgeschwindigkeit $\omega_{mes,sensor}$ auch aus einem wenig strukturierte Raumbild möglich, das auch nur ein wenig strukturiertes Raumabbild auf dem Sensor liefert.

Der sich dadurch ergebende ungewohnte Lösungsweg der vorliegenden Erfindung hat mit der Messung periodischen Strukturen sowohl im Zeitbereich, im Ortsbereich als auch im Winkelbereich zu tun:

Größen im Zeitbereich: Zeitperiode T; Dauer einer Schwingung [s], Zeitfrequenz f = 1/T [Hz], Kreisfrequenz oder Winkelgeschwindigkeit $\omega = 2\pi/T = 2\pi f$.

Größen im Ortsbereich: Ortsperiode; Länge einer Welle [m], Ortsfrequenz $v = 1/\lambda$. [lp/mm Linienpaare/mm oder Perioden/m], Ortskreisfrequenz oder Ortswinkelgeschwindigkeit $k = 2\pi/\lambda$.

Größen im Winkelbereich sind besonders für 2D-Kameras wichtig, da deren Sensorabbildungseigenschaften auf den Raumwinkel $\Omega$ im Raum keine Längenmessungen sondern nur Winkelmessungen erlauben:

Eine ideale Pixelabbildung von $\vartheta_{pix}$ und $\varphi_{pix}$ in den Raum erzeugt mit bipolar gewichteten Pixelpaaren Winkelperioden von horizontal $2\vartheta_{pix}$ und vertikal $2\varphi_{pix}$ in mrad (Milli-Radiant), wobei der horizontale und der vertikale Öffnungswinkel $\vartheta_M$ bzw. $\varphi_N$ durch Division der halben zugehörigen Pixelzahl M/2 bzw. N/2 die Winkelperioden im Raum ergeben.

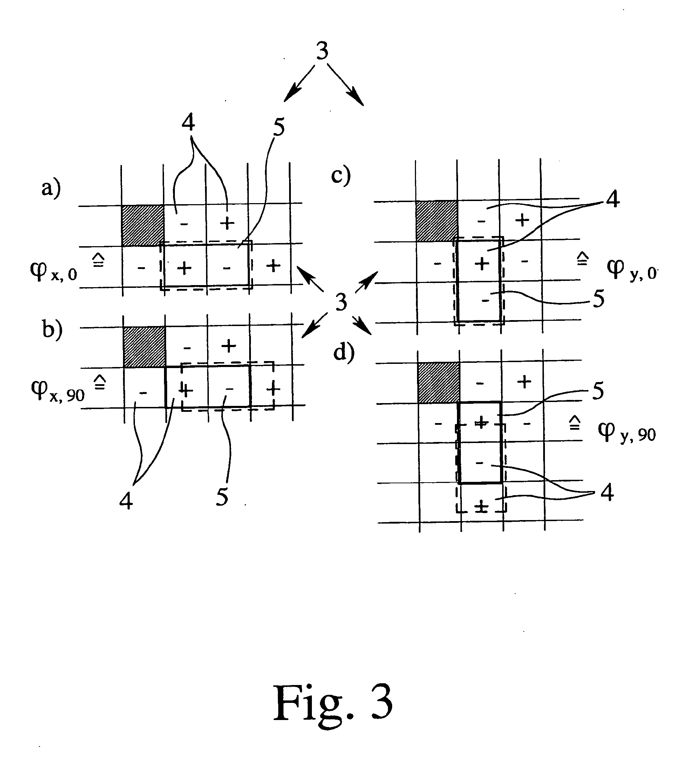

Die Messung der Winkelgeschwindigkeiten $\omega_{rot} = \omega_{mes}$ wird vorzugsweise nach der Entzerrung der fehlerhaften Abbildung eines ebenen Sensors durchgeführt - wie nachfolgend anhand der Zeichnungen ab Fig. 3 dargestellt. Dabei wird eine Bildverschiebung z.B. in x-Richtung mit der Geschwindigkeit $v_x$ auf dem Sensor bei abwechselnd positiver und negativer Gewichtung der zufälligen Intensitäten die so gefilterte Ortsfrequenz mit 2 Pixeln pro Periode = 1/2p mit p als Pixelgröße in der Summe der Amplituden der einbezogen Perioden im Zeitbereich die Periode $T_x(t) = \lambda_x / v_x$ bzw. Frequenz $f_x(t) = v_x / \lambda_x$ ein Signal $A_x(t)$ erzeugen. Dieser komplexe Zeiger $A_x(t)$ repräsentiert die durch das Ortsfrequenzfilter gewonnene lokale Spektrallinie mit zufälliger Bildamplitude und Bildphase und kann somit Phasenwerte zur Gewinnung der zugehörigen Winkelgeschwindigkeit durch Phasenänderungen pro Abtastperioden liefern.

Die Raumabbildwinkelgeschwindigkeit $\omega_{mes,sensor}$ des Raumabbildes auf dem Sensor wird folglich über eine Ortsfrequenzanalyse der Sensorelementsignale des Sensors ermittelt. Ähnlich wie im Zeitbereich durch Korrelation eines zeitveränderlichen Signals mit einer harmonischen Schwingung einer bestimmten Frequenz diejenigen Bestandteile des Zeitsignals extrahiert werden können, die die Frequenz der korrelierten harmonischen Schwingung aufweisen - Zeitfrequenzfilter -, lassen sich im Ortsbereich durch entsprechende Korrelation eines räumlich erstreckten Signals - Raumabbild - mit einem Signal - z.B. Gewichtungsbild aus Sensorelementen - bestehend aus einer harmonischen Schwingung mit einer bestimmten Ortsfrequenz, solche Bildbestandteile extrahieren, die diese spezielle Ortsfrequenz des Ortfrequenzfilters aufweisen.

Genau wie im Zeitbereich ist die Frequenzfilterung im Ortsbereich in der speziellen Gewichtung der empfangenen Sensorsignale begründet, wobei die Gewichtung üblicherweise mit einer harmonischen Schwingung erfolgt. Der Extraktionseffekt ist darin begründet, daß sich Signale mit einer anderen Ortsfrequenz als der des Ortsfrequenzfilters herausmitteln, insbesondere dann, wenn das Ortsfrequenzfilter über mehrere Ortsperioden erstreckt wird. Erfindungsgemäß wird also durch geeignete Gewichtung von Sensorelementsignalen wenigstens zweier Sensorelemente - im folgenden allgemein als Voxel bezeichnet - in wenigstens einer Sensorrichtung ein Ortsfrequenzfilter gebildet, das es ermöglicht, das Raumabbild nach einer Ortsfrequenz auszuwerten, was in verschiedener Weise geschehen kann, worauf später im Detail eingegangen werden wird.

Erfindungsgemäß unterzieht das Ortsfrequenzfilter die Sensorelementsignale des Voxels einer Ortsfrequenzfilterung in wenigstens zwei verschiedenen Ortsfrequenzphasen, wobei aus den erhaltenen korrespondierenden Ortsfrequenzfilterkomponenten eine Raumabbildphase des Voxels ermittelt wird. In einem speziellen Fall kann es sich bei den zwei verschiedenen Ortsfrequenzfilterkomponenten um die Inphase- und die Quadratur-Komponente der Raumabbildphase des Voxels handeln.

Aufgrund der Relativgeschwindigkeit der Bewegung der Bilderfassungsvorrichtung bewegt sich das Raumabbild, insbesondere das Raumabbild des Objekts, dessen Abstand ermittelt werden soll, über den Sensor und damit über die Sensorelemente des Voxels hinweg. Bei einer zeitlichen Abtastung des Ortsfrequenzfilters werden zwei Raumabbildphasen des Voxels ermittelt, wobei dann aus der Differenz der beiden Raumabbildphasen und der Division mit der Abtastperiode die Raumabbildwinkelgeschwindigkeit des Raumabbildes ermittelt wird. Wie zuvor aufgezeigt worden ist, läßt sich dann über die Relativgeschwindigkeit der Bilderfassungsvorrichtung, die Raumabbildwinkelgeschwindigkeit des auf das Voxel abgebildeten Objekts und über den Ablagewinkel des Objekts der Abstand des Objekts ermitteln.

Das vorliegende Verfahren zu Abstandsbestimmung dient in der praktischen Anwendung nicht nur der Bestimmung eines Abstandes eines Objektes aus dem gesamten - strukturierten - Raumbild, vielmehr wird aus der Abbildung des Raumbildes, also aus dem Raumabbild, eine Vielzahl von Abstandsinformationen in verschiedenen Ablagewinkeln gewonnen, so daß schließlich ein 3D-Raumbild der gesamten wahrgenommenen Szene resultiert. Bei einer bevorzugten Ausgestaltung des erfindungsgemäßen Verfahrens wird daher eine Vielzahl von Abständen R in verschiedenen Ablagewinkeln ermittelt und aus der Vielzahl von Abständen ein 3D-Raumbild erstellt.

Das erfindungsgemäße Verfahren zur Abstandsbestimmung weist gegenüber aus dem Stand der Technik bekannten Verfahren erhebliche Vorteile auf. Beispielsweise kann das Verfahren mit einem ganz gewöhnlichen Sensor durchgeführt werden, im Falle eines lichtempfindlichen Sensors also beispielsweise durch Verwendung eines handelsüblichen Bildsensors zum Beispiel in CCD- oder CMOS-Technologie. Der verwendete Bildsensor muß nicht in besonderer Weise ausgestaltet sein, da die Ortsfrequenzfilterung der Sensorelementsignale eines Voxels allein durch geeignete Gewichtung der Sensorelementsignale erfolgt, wobei diese Gewichtung durch eine nachgelagerte Signalverarbeitung erfolgen kann, die entweder algorithmisch durch eine oder mehrere für sich jeweils sequentiell arbeitende Datenverarbeitungsvorrichtungen vorgenommen wird oder beispielsweise auch hardwaremäßig implementiert sein kann; das erfindungsgemäße Verfahren ist unabhängig von der jeweils zur Anwendung kommenden technologischen Umsetzung. Die Ortsfrequenzfilterung ist sehr einfach umsetzbar und liefert praktisch unmittelbar die Raumabbildwinkelgeschwindigkeit eines Objektes, ohne daß das Raumabbild des Objekts durch kompliziertes Auffinden von Korrespondenzen mittels Bildanalyse verfolgt werden muß.

Die Abmessungen der Sensorelemente des Sensors legen die kleinstmögliche Ortsperiode fest, mit der ein Ortsfrequenzfilter realisierbar ist, diese entspricht der Erstreckung zweier Sensorelemente in der auszuwertenden Sensorrichtung. Je nach Größe des Sensors sind jedoch beliebig größere Ortsperioden des Ortsfrequenzfilters realisierbar, die insgesamt ganzzahlige Vielfache der Abmessung eines Sensorelements ausmachen können und die gleichzeitig und ggf. auch adaptiv zur genaueren Bestimmung der Raumabbildwinkelgeschwindigkeit genutzt und ausgewertet werden können.

Die Abstandsbestimmung ist auch nicht abhängig von der Fremdbeleuchtung des zu erfassenden Objekts durch die Bilderfassungsvorrichtung mit bestimmten Meßsignalen, wie zum Beispiel kohärentem Licht. Zur Realisierung eines Ortsfrequenzfilters sind lediglich die Sensorelementsignale mit ihren erfaßten Signalintensitäten auszuwerten, hierbei kann es sich beispielsweise im Falle eines lichtempfindlichen Bildsensors z. B. um schwach melierte Grauwerte oder gleichmäßig und stochastische Texturen erzeugt durch Straßenbelag, Rasen, Blätterwerk usw. handeln, was bei anderen Bilderfassungsvorrichtungen zu unlösbaren Korrespondenzproblemen führen kann. Ein weiterer Vorteil des erfindungsgemäßen Verfahrens besteht darin, daß es nicht empfindlich ist gegenüber Eigenbewegungen der Bilderfassungsvorrichtung, eine Relativgeschwindigkeit der Bewegung der Bilderfassungsvorrichtung zu dem Objekt, dessen Abstand erfaßt werden soll, ist vielmehr für die Abstandsbestimmung notwendig.

Der Erfindung liegt ferner die Erkenntnis zugrunde, daß eine Rotationskomponente der Bewegung der Bilderfassungsvorrichtung im Rahmen des Sichtfeldes zu keiner Raumabbildverschiebung führt, die eine Ortsinformation enthält. Dies ist beispielsweise nachvollziehbar, wenn eine Rotation der Bilderfassungsvorrichtung um eine Achse der Hauptebene des Bilderzeugungselements der Bilderfassungsvorrichtung angenommen wird. Bei dieser Rotationsbewegung werden alle Elemente des Raumbildes unabhängig von ihrem Objektabstand (!) mit der gleichen durch die Rotation verursachten Winkelgeschwindigkeit auf dem Sensor bewegt, die abgebildeten Objekte verändern in dem Raumabbild ihre relative Position zueinander nicht. Der zuvor beschriebene Effekt gilt auch für alle anderen Rotationsbewegungen und den Rotationsanteil einer gemischt rotatorischtranslatorischen Bewegung der Bilderfassungsvorrichtung.

Nach einer besonders vorteilhaften Ausgestaltung der Erfindung ist deshalb vorgesehen, daß zur Ermittlung der Raumabbildwinkelgeschwindigkeit und damit des Objektabstandes im wesentlichen nur die Translationskomponente der Bewegung der Bilderfassungsvorrichtung herangezogen wird. Dies ist beispielsweise realisierbar, indem die enthaltenen Rotationskomponenten der Bewegung der Bilderfassungsvorrichtung durch Stabilisierung der Bilderfassungsvorrichtung kompensiert werden, wobei die Bilderfassungsvorrichtung bzw. Komponenten der Bilderfassungsvorrichtung so der Rotationsbewegung entgegengesetzt ausgerichtet werden, daß das Raumabbild auf dem Sensor die Rotationsbewegung nicht nachvollzieht, das Raumabbild folglich nur die Translationsbewegung nachbildet. Eine andere Möglichkeit besteht darin, daß die in der Bewegung der Bilderfassungsvorrichtung enthaltene Rotationskomponente zwar zu dem Sensor der Bilderfassungsvorrichtung gelangt, aber erfaßt und nachträglich eliminiert wird.

Ein Sonderfall paralleler Rotationen mag die Rotationskompensation der störenden echten Rotation veranschaulichen: bei einer ebenen Kurvenfahrt mit montierter Bilderfassungsvorrichtung und konstanter Geschwindigkeit $v_{rot}$ = 4m/s um einen z.B. 40m weit entfernten Baum als Kurvenmittelpunkt wird trotz der echten Rotation $\omega_{rot}$ = - 4m/s /40m = - 0,10 rad/s (positiv, wenn in gleicher Kurvensituation der Baum spiegelverkehrt steht) auf dem Raumabbild eine falsche Winkelgeschwindigkeit $\omega_{meß}$ = 0 gemessen, weil das betreffende abbildende Sensorelement drehbewegungslos auf den Baum gerichtet ist und so die durch Translation verursachte Pseudo-Rotation vollständig kompensiert. Erst der Wert $\omega_{meß}$ - $\omega_{rot}$ = 0 - (- 4m/s /40m) = +0,10 rad/s gibt den richtigen Wert wieder. Komplexere Rotationen müssen nur mit ihrem vektoriellen Anteil in der Sensorebene berücksichtigt werden. Wenn dieser zum Vektor $\omega_{meß}$ parallele Anteil $\omega_{rot}$ ermittelt wurde, kann die störende Rotation der betreffenden Meßperiode unter Berücksichtigung der zu Gl. (2) und (3) ausgeführten Anmerkungen zum "cos$\alpha$"- bzw. "cos($\alpha$-$\beta$)"-Term gemäß Gl. (4) kompensiert werden.

$$R = \frac{v_{tr} \cdot \sin\alpha}{(\omega_{meß} - \omega_{rot})} \qquad\qquad (4)$$

Bei einer weiteren vorteilhaften Ausgestaltung der Erfindung wird die Raumabbildwinkelgeschwindigkeit in mehr als nur einer Sensorrichtung ermittelt, so daß die Abbildung eines beliebig angeordneten Objektes bei beliebiger Bewegung der Bilderfassungsvorrichtung vollständig erfaßt werden kann, denn im allgemeinen Fall überstreicht das Raumabbild des Objektes auf dem Sensor den Sensor nicht nur in einer Sensorrichtung, sondern örtlich verteilt in mehreren Sensorrichtungen. Bei Ermittlung von Raumabbildwinkelgeschwindigkeiten in mehr als einer Sensorrichtung werden die je Voxel erhaltenen Raumabbildwinkelgeschwindigkeiten vektoriell zu einer Gesamtraumabbildwinkelgeschwindigkeit addiert, und die erhaltene Gesamtraumabbildwinkelgeschwindigkeit wird der Ermittlung des Objektabstandes dann zugrundegelegt, so daß eine richtige Abstandsinformation des Objektes und der Projektion der Bewegungsrichtung erhalten wird. In diesem Zusammenhang sieht eine weitere bevorzugte Ausgestaltung der Erfindung vor, daß die Schwerpunkte der in verschiedenen Sensorrichtungen zur Berechnung des Objektabstandes für einen bestimmten Raumteil gebildeten Voxel nahe zusammen liegen, insbesondere im wesentlichen identisch sind. Dies hat den Vorteil, daß die verschiedenen addierten Raumabbildwinkelgeschwindigkeiten in allen ausgewerteten Sensorrichtungen tatsächlich zu derselben Raumrichtung und daher zu demselben erfaßten Objekt gehören.

Die vollständige Trajektorie des Objektes ergibt sich bei bekannter relativer Geschwindigkeit $v_{tr}$ aus der Meßfolge der dreidimensionalen Objektpositionen.

In einem bevorzugten Ausführungsbeispiel des erfindungsgemäßen Verfahrens werden die Gewichtungen von Sensorelementsignalen der Sensorelemente eines Voxels in einer Sensorrichtung in einer Ortsfrequenzfilterphase so gewählt, daß eine möglichst gute Sinus-Approximation realisiert wird, so daß ein bestimmter harmonischer Anteil des Raumabbildes möglichst gut extrahiert werden kann. Bei der Wahl der Gewichtungen der Sensorelementsignale der Sensorelemente wird dabei insbesondere auch der Geometrie der beteiligten Sensorelemente Rechnung getragen, da die Geometrie der Sensorelemente gleichermaßen die Funktionalität des erhaltenen Ortsfrequenzfilters beeinflußt. Dies ist insbesondere dann von Bedeutung, wenn die Form der Sensorelemente von der - jedenfalls für einen lichtempfindlichen Sensor üblichen - rechteckigen Form abweicht.

Bei einer weiteren, mit dem zuvor erläuterten Merkmal in Beziehung stehenden bevorzugten Ausgestaltung der Erfindung werden die Sinus-Approximationen der Gewichtungen der Sensorelementsignale in wenigstens zwei Ortsfrequenzfilterphasen in einer Sensorrichtung relativ zueinander so gewählt, daß die Ortsfrequenzfilterphasen um im wesentlichen eine viertel Ortsperiode zueinander phasenverschoben sind. Durch diese Maßnahme wird erreicht, daß die beiden erhaltenen korrespondierenden Ortsfrequenzfilterkomponenten orthogonal aufeinander stehen und gleichsam ein orthogonales Koordinatensystem für den Zeiger der Raumabbildphase aufspannen. Die Ortsfrequenzfilterkomponenten verhalten sich in diesem Fall wie die Inphase- und Quadratur-Komponenten von entsprechenden, aus der Nachrichtentechnik aus dem Zeitfrequenzbereich bekannten I/Q-Auswertesystemen.

Durch die zwei mit den zwei auszuwertenden Ortsfrequenzfilterphasen korrespondierenden Ortsfrequenzfilterkomponenten wird der das Ausgangsignal des Ortsfrequenzfilters beschreibende Zeiger und damit die Raumabbildphase vollständig beschrieben, unabhängig davon, ob die Ortsfrequenzfilterphasen die Approximation einer harmonischen Schwingung darstellen und die Ortsfrequenzfilterphasen relativ zueinander orthogonal aufeinander stehen. Der Betrag - also die Länge - des Zeigers des Ortsfrequenzfilterausgangssignals ermöglicht die Beurteilung der zugrundeliegenden Signalqualität, wobei Signale zu geringer Amplitude verworfen werden können.

In einer besonders vorteilhaften Ausgestaltung der Erfindung wird die Ortsfrequenzfilterung in wenigstens einer Sensorrichtung in verschiedenen Ortsfrequenzfilterphasen durchgerührt, indem wenigstens ein Sensorelement einem Voxel - unabhängig von der auszuwertenden Ortsfrequenzfilterphase - fest zugeordnet wird und der Sensor in und/oder entgegen der einen Sensorrichtung entsprechend der zu erzielenden Ortsfrequenzfilterkomponente ($A_0$, $A_{90}$) in der jeweiligen Ortsfrequenzfilterphase verschoben wird, so daß also eine Sensorverschiebung realisiert wird. Bei der Anwendung dieses Verfahrens kann ein Ortsfrequenzfilter in einer Phase beispielsweise aus zwei in der gewählten Sensorrichtung benachbarten Sensorelementen bestehen, deren Sensorelementsignale zum Beispiel mit unterschiedlichen Vorzeichen gewichtet werden. Das gleiche, aus denselben benachbarten Sensorelementen bestehendes Voxel gestattet eine Ortsfrequenzfilterung desselben Raumabbildes in einer anderen Ortsfrequenzfilterphase, indem der Sensor in der gewählten Sensorrichtung verschoben wird, beispielsweise um die Länge eines halben Sensorelements bzw. um die Länge eines Viertels einer Ortsperiode verschoben wird, wodurch eine 90°-Verschiebung realisiert wird, in der Praxis z. B. durch ein als Aktor betriebenes Piezoelement. Bei dem so ausgestalteten Verfahren können die beiden Ortsfrequenzfilterkomponenten in den verschiedenen Ortsfrequenzfilterphasen also zeitlich nur nacheinander ermittelt werden. Es ist daher besonders wünschenswert, die Verschiebung des Sensors möglichst schnell nach Erfassung der ersten Ortsfrequenzfilterkomponente in der ersten Ortsfrequenzfilterphase durchzuführen, so daß die beiden verschiedenen Ortsfrequenzfilterphasen in der gewählten Sensorrichtung möglichst zeitnah zueinander ermittelt werden, damit das Raumabbild zwischenzeitlich nur einer möglichst geringen Lageänderung unterworfen gewesen ist.

Gemäß einer weiteren bevorzugten Ausgestaltung der Erfindung, die mit der zuvor beschriebenen Ausgestaltung auch kombiniert realisiert werden kann, wird die Ortsfrequenzfilterung in wenigstens einer Sensorrichtung in verschiedenen Ortsfrequenzfilterphasen durchgeführt, indem wenigstens ein Sensorelement einem Voxel - unabhängig von der auszuwertenden Ortsfrequenzfilterphase - fest zugeordnet wird und das Raumabbild in und/oder entgegen der einen Sensorrichtung entsprechend der zu erzielenden Ortsfrequenzfilterkomponente $A_0$, $A_{90}$ in der jeweiligen Ortsfrequenzfilterphase verschoben wird, wodurch eine Raumabbildverschiebung realisiert wird. Diese Raumabbildverschiebung wird insbesondere durch Lageänderung des Bilderfassungselements erzielt, wozu nur sehr geringe Auslenkungen des Bilderfassungselements nötig sind; es kann sich dabei auch nur um die Lageänderung eines Teils des Bilderfassungselements handeln, beispielsweise um die Auslenkung eines Prisma, das Bestandteil des Bilderfassungselements sein kann. Für die Auswertung der Sensorelementsignale gilt bei der Raumabbildverschiebung grundsätzlich das gleiche, was zuvor auch zu der Sensorverschiebung ausgeführt worden ist.

Wenn davon die Rede ist, daß es vorliegend um ein Verfahren zur Bestimmung des Abstandes wenigstens eines im Raum befindlichen Objektes zu einer Bilderfassungsvorrichtung mit einem Bilderzeugungselement und einem Sensor geht, dann mag dies zunächst die Vorstellung mit sich bringen, daß hier lediglich optische Bilderfassungsvorrichtungen betrachtet würden. Tatsächlich ist das erfindungsgemäße Verfahren weder auf die Verwendung mit einer "üblichen" Bilderfassungsvorrichtung im sichtbaren Bereich des Lichtes beschränkt, noch überhaupt auf die Verwendung mit einer Bilderfassungsvorrichtung, die sich auf die Detektion elektromagnetischer Strahlung beschränkt. Vielmehr ist das hier beschriebene Verfahren auf eine Vielzahl von Signalen anwendbar, die von im Raum befindlichen Objekten ausgehen, also beispielsweise von diesen Objekten reflektiert werden. Dabei kann es sich in Analogie zu dem von Objekten reflektierten Tageslicht beispielsweise auch um von Objekten reflektierte Schallwellen handeln, die durch ein gasförmiges oder flüssiges Medium transportiert werden. Das erfindungsgemäße Verfahren hängt grundsätzlich nicht von der Art der Bilderfassungsvorrichtung und der Art der erhaltenen Sensorelementsignale ab, solange der Sensor aus mehreren im wesentlichen flächig nebeneinander angeordneten Sensorelementen besteht und das Bilderzeugungselement wenigstens einen Teil des Raumes auf den Sensor abbildet und ein von dem Bilderzeugungselement unter einem bestimmten Ablagewinkel erfaßter Raumteil auf ein bestimmtes Sensorelement abgebildet wird und von den Sensorelementen entsprechende - wie auch immer geartete - Sensorsignale erzeugt werden.

Nach einer weiteren besonders bevorzugten Ausgestaltung des erfindungsgemäßen Verfahrens, wird die Ortsfrequenzfilterung in wenigstens einer Sensorrichtung in verschiedenen Ortsfrequenzfilterphasen durchgeführt, indem je auszuwertender Ortsfrequenzfilterphase - zumindest teilweise - verschiedene Sensorelemente einem Voxel - Phasenvoxel - fest zugeordnet werden, wobei die derart entstehenden Phasenvoxel in der auszuwertenden Sensorrichtung gegeneinander ortsphasenverschoben sind, wodurch letztlich eine Voxelverschiebung realisiert wird. Das Verfahren gemäß diesem Ausführungsbeispiel hat den Vorteil, daß zur Auswertung zweier verschiedener Ortsfrequenzfilterphasen nur ein zu einem einzigen Zeitpunkt von dem Sensor erfaßtes Raumabbild erforderlich ist, es müssen lediglich - sofern die Phasenvoxel zumindest teilweise die gleichen Sensorelemente verwenden - die Sensorelementsignale bestimmter Sensorelemente mehrfach bewertet bzw. gewichtet werden, um eine mehrfach bewertet bzw. gewichtet werden, um eine Ortsfrequenzfilterung in den beiden Ortsfrequenzfilterphasen zu ermöglichen. Mit diesem Verfahren lassen sich insgesamt sehr hohe Abtastraten der Ortsfrequenzfilter erzielen.

Im Extremfall haben die Phasenvoxel, also die Voxel, die die Ortsfrequenzfilterung in verschiedenen Ortsfrequenzfilterphasen ermöglichen, überhaupt keine gemeinsamen Sensorelemente mehr, so daß zur Erfassung verschiedener Ortsfrequenzfilterphasen nicht mal mehr eine Voxelverschiebung notwendig ist. Auch wenn es in diesem Fall keine Sensorelemente gibt, die sowohl zur Auswertung der einen als auch der anderen Ortsfrequenzfilterphase benötigt werden, ist dies ein besonderer Fall des vorbeschriebenen Verfahrens der Voxelverschiebung, auch wenn in diesem Fall gerade keine Voxelverschiebung mehr notwendig ist.

Gemäß einer weiteren bevorzugten Ausgestaltung der Erfindung werden zur Feststellung der Ortsfrequenzfilterkomponenten eines Voxels in einer Sensorrichtung nicht nur die gewichteten Sensorelementsignale des betreffenden, die Ortsperiode definierenden Voxels - Zentralvoxel - herangezogen, sondern zusätzlich auch die Sensorsignale von wenigstens einer in der auszuwertenden Sensorrichtung liegenden ortsperiodischen Wiederholung des zentralen Voxels - Nebenvoxel-, so daß das Zentralvoxel und das Nebenvoxel eine Voxelzeile definieren, wobei insbesondere die korrespondierenden Sensorsignale des Zentralvoxels und des Nebenvoxels aufsummiert werden. Das Zentralvoxel bildet vorzugsweise den Mittelpunkt einer Voxelzeile. Von besonderen Vorteil ist es in diesem Zusammenhang, wenn die Sensorsignale der Nebenvoxel schwächer gewichtet werden als die korrespondierenden Sensorsignale des Zentralvoxels, nämlich insbesondere mit zunehmenden Abstand von dem zentralen Voxel abnehmend gewichtet werden, insbesondere gemäß einer glockenförmigen Gewichtungskurve, vorzugsweise gemäß einer harmonischen Gewichtungskurve, vorzugsweise gemäß einer Gewichtungskurve ohne Gleichanteil. Es eignet sich beispielsweise eine Gaußkurve als Gewichtungskurve. Durch diese Maßnahme wird gewährleistet, daß Oberwellen und Rauschen grundsätzlich unterdrückt werden und daß das aus einem Zentralvoxel hinauswandernde Raumabbild weiterhin erfaßt wird und zur kontinuierlichen Erfassung der Raumabbildwinkelgeschwindigkeit weiter erfaßbar ist, so daß eine gewisse Stetigkeit in der Erfassung der Raumabbildphasen und damit der Raumabbildwinkelgeschwindigkeit gewährleistet ist.

Aus den zuvor gemachten allgemeinen Ausführungen zu dem erfindungsgemäßen Verfahren, insbesondere zu den geometrischen und kinematischen Besonderheiten des erfindungsgemäßen Verfahrens, geht hervor, daß die Relativgeschwindigkeit der Bilderfassungsvorrichtung - hier insbesondere die Translationskomponente der Bewegung - direkt in den ermittelten Objektabstand eingeht. Vor diesem Hintergrund ist ersichtlich, daß eine statische Szenerie von Objekten mit dem erfindungsgemäßen Verfahren ohne weiteres gut erfaßbar ist, sich Ungenauigkeiten jedoch dann ergeben, wenn die im Erfassungsbereich der Bilderfassungsvorrichtung befindlichen Objekte eine - unbekannte - Eigenbewegung aufweisen.

Gemäß einer besonders bevorzugten und vorteilhaften Ausgestaltung der Erfindung wird der zu einem ersten Zeitpunkt unter einem bestimmten Ablagewinkel ermittelte Abstand eines Objektes zu der Bilderfassungsvorrichtung zur Prädiktion zukünftiger Abstände des Objektes unter zukünftigen Ablagewinkeln unter Annahme statischer - nicht eigenbewegter Objekte - und unter Kenntnis der Relativgeschwindigkeit der Bewegung der Bilderfassungsvorrichtung herangezogen. Zum Verständnis dieser Ausgestaltung der Erfindung ist es wichtig, sich zu vergegenwärtigen, daß der von der Bilderfassungsvorrichtung erfaßte Verlauf eines statischen Objektes bei bekannter Relativgeschwindigkeit der Bewegung der Bilderfassungsvorrichtung zu diesem Objekt zu jedem Zeitpunkt determinierbar ist, sobald die Position des Objektes - Objektabstand und Ablagewinkel - zu einem Zeitpunkt bekannt gewesen ist. Wenn das Objekt statisch ist, also über keine Eigenbewegung verfügt, läßt sich die Position dieses Objektes zu jedem zukünftigen Zeitpunkt demnach weitgehend deterministisch vorhersagen, insofern ist der Begriff "Prädiktion" in der hier gemachten Verwendung nicht mit einer unwägbaren Komponente versehen, die nicht vorhergesagt werden könnte. Aufgrund der im Rahmen der Meßgenauigkeiten Vorhersehbarkeit der Position eines einmal erfaßten - statischen - Objektes läßt sich ein eigenbewegtes Objekt dadurch ermitteln, indem zu einem bestimmten Zeitpunkt die erwartete Objektposition abgeglichen wird mit dem meßtechnisch an dieser Stelle tatsächlich erfaßten Objektabstand, wobei abweichende Objektabstände unter einem bestimmten Ablagewinkel auf ein eigenbewegtes Objekt hinweisen und wobei über die Größe dieses Abgleichs solcher benachbarter eigenbewegter und bekannter statischer Objekte die eigenbewegten Objekte in ihrer Position und Bewegung schätzbar sind.

Die Erfindung betrifft weiterhin eine Vorrichtung zur Bestimmung des Abstandes zu wenigstens einem im Raum befindlichen Objekt, mit einem Bilderzeugungselement, einem Sensor und einer Signalverarbeitungseinheit, wobei der Sensor aus mehreren im wesentlichen flächig nebeneinander angeordneten Sensorelementen - Voxel - besteht, von dem Bilderzeugungselement wenigstens ein Teil des Raumes auf den Sensor abbildbar ist - Raumabbild -, wobei ein von dem Bilderzeugungselement unter einem bestimmten Ablagewinkel erfaßbarer Raumteil auf ein bestimmtes Sensorelement abbildbar ist und von den Sensorelementen entsprechende Sensorelementsignale erzeugbar sind, wobei die Signalverarbeitungseinheit so ausgestaltet ist, daß sie eines der zuvor beschriebenen Verfahren durchführen kann.

Im einzelnen gibt es nun verschiedene Möglichkeiten, das erfindungsgemäße Verfahren und die erfindungsgemäße Vorrichtung auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen

Fig. 1          eine Darstellung der grundsätzlichen geometrischen und kinematischen Zusammenhänge,

Fig. 2a, 2b     eine anschauliche Darstellung der Abstandsbestimmung nach der Kreisbewegungsgleichung im geographischen Koordinatensystem und Einheitskugelkoordinatensystem im gleichen Bild sowie ein entsprechendes Beispiel,

Fig. 3          eine Darstellung eines Sensors mit Sensorelementen und eine Darstellung korrespondierender, über Raumabbildverschiebung erzielter Ortsfrequenzfilterphasen,

Fig. 4          einen Sensor mit rechteckigen Sensorelementen und über Voxelverschiebung erzielte Ortsfrequenzfilterphasen,

Fig. 5          einen Sensor mit rechteckigen Sensorelementen und in Diagonalrichtung des Sensors realisierter Ortsfrequenzfilter,

Fig. 6          einen Sensor mit hexagonalen Sensorelementen - Hexeln -, zweizeiligem Voxel und Auswertung in zwei Sensorrichtungen,

Fig. 7          einen Sensor mit hexagonalen Sensorelementen - Hexeln -, zwei und dreizeiligem Voxel und Auswertung in drei Sensorrichtungen,

Fig. 8          einen Sensor mit - Hexeln - und dreizeiligem, symmetrischem Voxel,

Fig. 9          einen Sensor mit - Hexeln - und dreizeiligem, symmetrischem Voxel, mit vollständiger Voxeldichte bei der Auswertung,

Fig. 10         einen Sensor mit - Hexeln - und dreizeiligem, symmetrischem Voxel, mit 25%-iger Voxeldichte bei der Auswertung,

Fig. 11         einen Sensor mit - Hexeln - und dreizeiligem, symmetrischem Voxel, mit 11,1%-iger Voxeldichte bei der Auswertung,

Fig. 12         einen Sensor mit - Hexeln - und dreizeiligem, symmetrischem Voxel, mit 6,25%-iger Voxeldichte bei der Auswertung und

Fig. 13         einen Sensor mit rechteckigen Sensorelementen und dreizeiligem, symmetrischem Voxel.

In Fig. 1 sind zunächst dargestellt die geometrischen und kinematischen Verhältnisse, die zum Verständnis des hier beschriebenen Verfahrens notwendig sind zur Bestimmung des Abstandes R wenigstens eines im Raum befindlichen Objektes 1 zu einer nicht näher dargestellten Bilderfassungsvorrichtung mit einem Bilderzeugungselement 2 und einem Sensor 3, wobei der Sensor 3 aus mehreren im wesentlichen flächig nebeneinander angeordneten Sensorelementen 4 besteht. Das Bilderzeugungselement 2 - im vorliegenden Ausführungsbeispiel eine Linse - bildet einen Teil des Raumes auf den Sensor 3 ab, wobei dieses Abbild im folgenden als Raumabbild bezeichnet wird. Dabei wird ein von dem Bilderzeugungselement 2 unter einem bestimmten Ablagewinkel $\alpha$ erfaßter Raumteil auf ein bestimmtes Sensorelement 4 abgebildet, und von den Sensorelementen 4 werden entsprechende Sensorelementsignale erzeugt.

Gemäß den zuvor in den Gleichungen 1 bis 4 angegebenen mathematischen Zusammenhängen wird die Relativgeschwindigkeit v der Bewegung der Bilderfassungsvorrichtung zu dem Objekt 1 ermittelt, wobei mit "Ermittlung" auch gemeint sein kann, daß die Relativgeschwindigkeit v der Bewegung der Bilderfassungsvorrichtung vorgegeben und damit bekannt ist. In Fig. 1 ist der Fall dargestellt, daß sich die Bilderfassungsvorrichtung mit einer konstanten Relativgeschwindigkeit v geradlinig fortbewegt. Das im Raum befindliche Objekt 1 nähert sich infolgedessen im Verlauf der Bewegung der Bilderfassungsvorrichtung derselben und damit dem dargestellten Bilderfassungselement 2 und dem Sensor 3 an, wobei die größte Nähe des Objektes 1 dann erreicht wird, wenn es die Position senkrecht zu der geradlinigen Bewegungstrajektorie der Bilderfassungsvorrichtung erreicht hat.

In Fig. 1 sind drei Positionen $P_1$, $P_2$ und $P_3$ des Objektes 1 dargestellt, die das Objekt 1 zu drei aufeinanderfolgenden, gleich beabstandeten Zeitpunkten einnimmt. Anhand Fig. 1 ist leicht vorstellbar, daß praktisch alle von der Bilderfassungsvorrichtung "unendlich weit" entfernten Objekte 1 unter einem gegen null gehenden Ablagewinkel $\alpha$ erkannt werden. Eine Entfernungsbestimmung ist unter diesen Bedingungen praktisch nicht möglich. Das Objekt 1 nimmt nacheinander die Positionen $P_1$ mit einem Abstand $R_1$ unter einem Ablagewinkel $\alpha_1$, die Position $P_2$ mit einem Abstand $R_2$ unter einem Ablagewinkel $\alpha_2$ und letztlich die Position $P_3$ in einem Abstand $R_3$ unter einem Ablagewinkel $\alpha_3$ ein. Die zugehörigen Abstände $\overline{P_1P_2}$, $\overline{P_2P_3}$ und $\overline{P_3P_4}$ sind hier aus Gründen der zeichnerischen Darstellung weit überhöht und betragen praktisch nur Bruchteile der Länge der Radiusvektoren.

Es ist erkennbar, daß sich der Ablagewinkel $\alpha$ mit zunehmender Annäherung des Objektes 1 an die Bilderfassungsvorrichtung bzw. an das Bilderzeugungselement 2 der Bilderfassungsvorrichtung zunehmend stark ändert, also die Winkelgeschwindigkeit, mit der der Radiusvektor $\overline{R}$ die Ablagewinkel $\alpha_1$, $\alpha_2$ und $\alpha_3$ überstreicht, zunimmt. Je näher ein Objekt 1 zu der Bilderfassungsvorrichtung gelegen ist und je geringer der Abstand R ist, mit dem ein Objekt 1 die Erfassungsvorrichtung passiert, desto höher ist die Winkelgeschwindigkeit, mit der das Objekt 1 an der Bilderfassungsvorrichtung vorüberzieht. Auch diese Zusammenhänge ergeben sich aus den mathematischen Zusammenhängen gemäß den Gleichungen 1 bis 4. Das hier beschriebene und dargestellte Verfahren basiert auf diesen erkannten Zusammenhängen.

Die Position $P_4$ wurde hier in Fig. 1 nicht weiter in Betracht gezogen, weil sie offensichtlich nicht mehr im Bilderfassungsbereich des Bilderzeugungsselements 2 liegt.

Ein wichtiger Vorteil des Verfahrens liegt in der Freiheit der Ausrichtung der Bilderfassungsvorrichtung. Diese muß für die Erfassung des Nahbereichs um Position $P_4$ lediglich in die entsprechend Richtung um z.B. 90° gedreht werden. Damit werden zugleich die Verzerrungen durch die Projektion auf einen kostengünstigen ebenen Sensor verringert und die Meßgenauigkeit der gesuchten Winkelgeschwindigkeit $\omega_{ort} = \omega_{mes}$ erhöht. Ein weiterer großer Vorteil wird damit offensichtlich: Anstelle der Drehung können Bilderfassungsvorrichtungen ohne sonstigen Aufwand parallel zur Erweiterung des Bilderfassungsbereichs betrieben werden.

Das allgemeine, insbesondere anhand der Fig. 1, 2a und 2b dargestellte und beschriebene Verfahren zur Bestimmung des Abstandes R wenigstens eines im Raum befindlichen Objektes 1 zu einer Bilderfassungsvorrichtung zeichnet sich dadurch aus, daß die Relativgeschwindigkeit v der Bewegung der Bilderfassungsvorrichtung zu dem Objekt 1 ermittelt wird, daß durch Auswertung der Sensorelementsignale wenigstens zweier Sensorelemente 4-Voxel 5- eine Raumabbildwinkelgeschwindigkeit $\omega_{mes,sensor}$ ermittelt wird und über die Relativgeschwindigkeit v der Bilderfassungsvorrichtung, die aus der Raumabbildwinkelgeschwindigkeit $\omega_{mes,sensor}$ des auf die Sensorelemente 4 abgebildeten Objekts 1 gewonnene orthogonale Objektwinkelgeschwindigkeit $\omega_{mes}$ und den Ablagewinkel $\alpha$ des Objekts 1 der Objektabstand R ermittelt wird. Die diesem allgemeinen Verfahren zugrundeliegenden Zusammenhänge sind im allgemeinen Teil der Beschreibung bereits ausführlich erläutert worden, wobei der allgemeine Beschreibungsteil aufgrund der verwendeten Formelzeichen ohne Einschränkungen direkt auf die Fig. 1, 2a und 2b lesbar ist.

Es ist bereits eingangs erläutert worden, daß das zur Anwendung kommende Verfahren zur Ermittlung der Raumabbildwinkelgeschwindigkeit $\omega_{mes,sensor}$ auf dem Sensorelement 4 im Grunde beliebig ist und das allgemeine Verfahren zur dynamischen Abstandsbestimmung nicht auf ein spezielles Verfahren beschränkt ist. Bei den dargestellten Ausführungsbeispielen wird die Ermittlung der Raumabbildwinkelgeschwindigkeit $\omega_{mes,sensor}$ durch die geschickte Ausgestaltung von Ortsfrequenzfiltern realisiert.

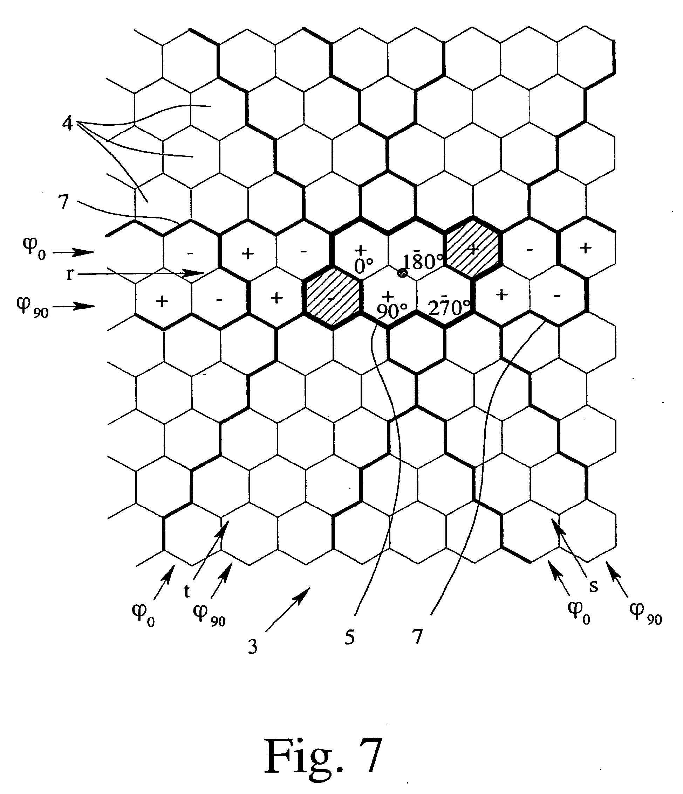

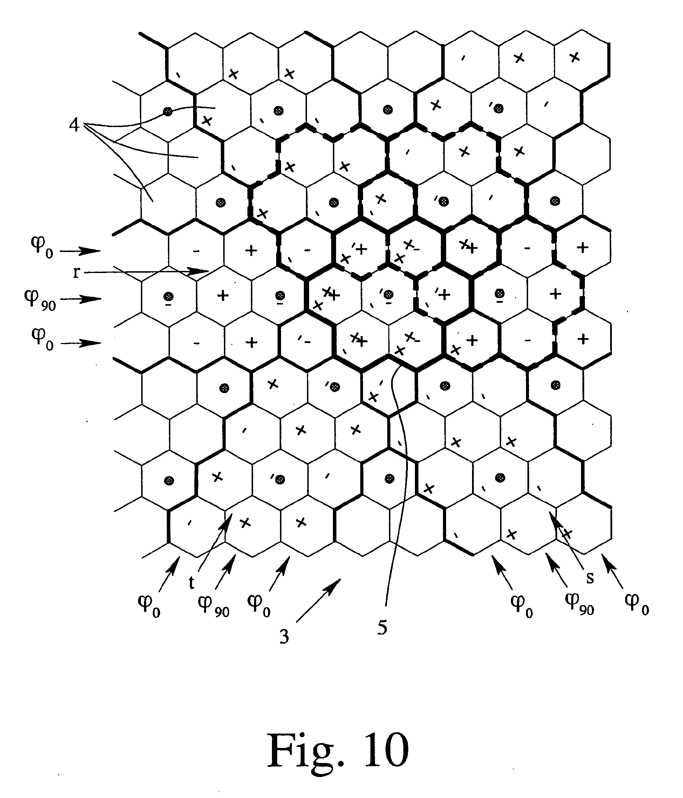

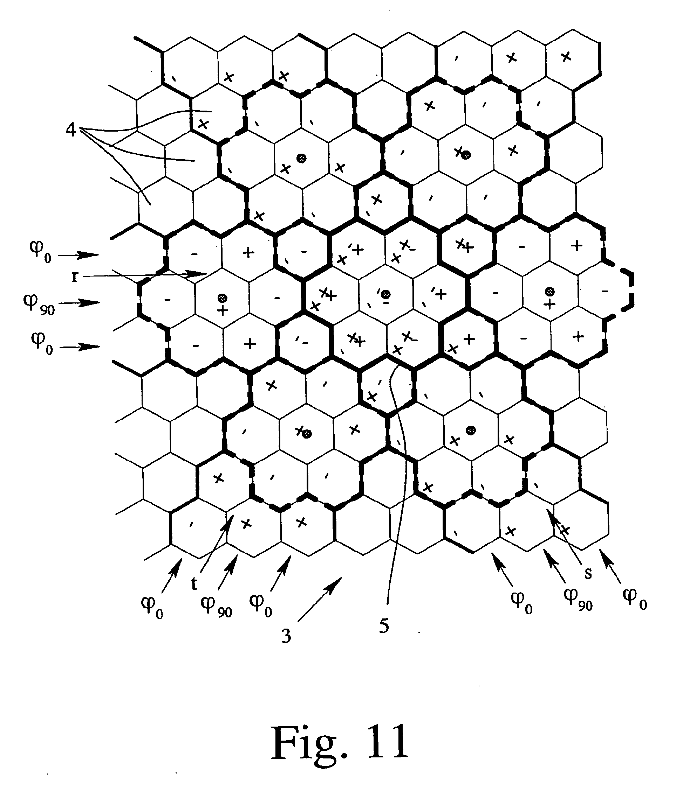

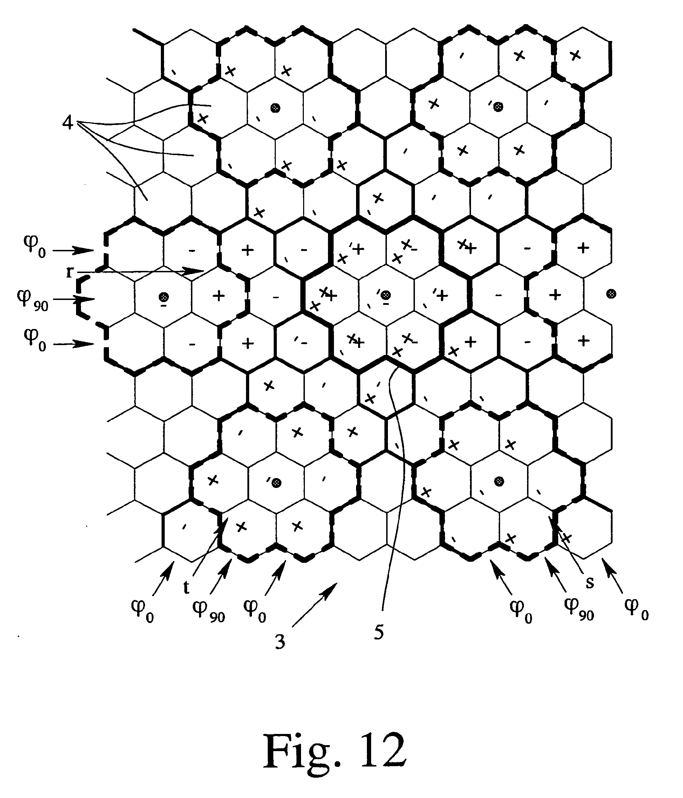

Die in den Fig. 1 bis 13 dargestellten Ausführungsbeispiele haben gemeinsam, daß die Raumabbildwinkelgeschwindigkeit $\omega_{mes,sensor}$ ermittelt wird, indem durch geeignete Gewichtung der Sensorelementsignale wenigstens zweier Sensorelemente 4 - die insgesamt ein Voxel 5 bilden - in wenigstens einer Sensorrichtung x, y, r, s, t ein Ortsfrequenzfilter gebildet wird, wobei das Ortsfrequenzfilter mindestens die Sensorelementsignale des Voxels 5 einer Ortsfrequenzfilterung in wenigstens zwei verschiedenen Ortsfrequenzfilterphasen $\varphi_0$, $\varphi_{90}$ unterzieht, und aus den erhaltenen korrespondierenden Ortsfrequenzfilterkomponenten $A_0$, $A_{90}$ eine Raumabbildphase $\varphi$ des Voxels 5 ermittelt wird, und daß durch zeitliche Signalabtastung des Ortsfrequenzfilters wenigstens zwei Raumabbildphasen $\varphi$ des Voxels 5 ermittelt werden und aus den zeitlich beabstandeten Raumabbildphasen $\varphi$ die Raumabbildwinkelgeschwindigkeit $\omega_{mes,sensor}$ ermittelt wird.

Anhand Fig. 1 ist zu erkennen, daß die jeweils senkrecht zu den Abstandsvektoren $R_1$, $R_2$ und $R_3$ stehenden Bewegungskomponenten von dem Sensor 3 erfaßt werden und von dem Sensor 3 als Raumabbildwinkelgeschwindigkeit $\omega_{mes,sensor}$ wahrgenommen werden können. Bei einem wie in Fig. 1 dargestellten flächigen Sensor 3 ist die Abbildung des Raumes mit zunehmendem Ablagewinkel $\alpha$ verzerrt, hier unrealistisch mit übergroßem Winkel zu optischen Achse dargestellt; ein Umstand, dem durch Multiplikation des gemäß Gleichung (1) ermittelten Abstandes R- insbesondere im Falle nicht kalibrierter Objektive -Rechnung getragen werden kann durch Division des Ergebnisses mit cos $\alpha$, wie in Gleichung (2) dargestellt. Die erfaßte und in den Gleichungen als $\omega_{meß,sensor}$ bezeichnete Raumabbildwinkelgeschwindigkeit bzw. die daraus ermittelte Objektwinkelgeschwindigkeit $\omega_{mes}$ beruhen im Idealfall auf einer Translationsbewegung der Bilderfassungsvorrichtung.

Wie weiter oben erläutert worden ist, enthalten die durch Rotation der Bilderfassungsvorrichtung verursachten Geschwindigkeiten des Raumabbildes keine Abstandsinformation, da die durch solche Bewegungen verursachten Verschiebungen - genauer Rotationen - des Raumabbildes unabhängig von dem Abstand sind, so daß die Beziehungen der Objekte untereinander sich im Raumabbild nicht ändern. Aus diesem Grund werden bei allen in den Fig. 1 bis 13 dargestellten Verfahren zur Ermittlung der Raumabbildwinkelgeschwindigkeit $\omega_{mes,sensor}$ und damit des Objektabstandes R im wesentlichen nur die Translationskomponenten der Bewegung der Bilderfassungsvorrichtung herangezogen, insbesondere indem enthaltene Rotationskomponenten $\omega_{rot}$ der Bewegung der Bilderfassungsvorrichtung durch Stabilisierung der Bilderfassungsvorrichtung kompensiert werden. Bei anderen - hier nicht dargestellten - Verfahren werden enthaltene Rotationskomponenten $\omega_{rot}$ der Bewegung der Bilderfassungsvorrichtung durch den Sensor 3 erfaßt, jedoch nachfolgend in der Bildverarbeitung eliminiert.

Fig. 2a, 2b sollen die relativ komplexen Zusammenhänge veranschaulichen, die der erfindungsgemäßen dreidimensionalen Objektabstandserfassung mit Hilfe einer nur zweidimensionalen Bilderfassungsvorrichtung zugrunde liegen. Problematisch in diesem Sinn sind insbesondere die scheinbar geringe Qualität der verfügbaren Informationen für die Bestimmung der Objektabstände - keine Längeninformationen -, ferner die Bewegungsfreiheit der Bilderfassungsvorrichtung im Raum, die außer der Kenntnis ihrer Trajektorie und ihrer translatorischen Geschwindigkeiten $v_{tr}$ z.B. im Weltkoordinatensystem der Objekte nur Winkelkenntnisse über unbekannte Objektpositionen erhält, den Ablagewinkel $\alpha$ von der eigenen Bewegungsrichtung zum unbekannten Objekt und dessen zeitliche Ableitung.

Da konkrete Längen zunächst nicht vorhanden sind, wird in Fig. 2a ein für das Verständnis geeignetes Koordinatensystem eingeführt, das geographische Koordinatensystem mit den üblichen Breiten- und Längenkreisen, zunächst als Einheitskugelkoordinatensystem $P(R, \theta, \Phi)$ mit dem Radius R = 1. Die in Fig. 1 dargestellte Aufgabe der Objektabstandsermittlung wird hier in das Kugelkoordinatensystem übertragen. Die Bilderfassungsvorrichtung befindet sich immer in einer Startposition im Mittelpunkt des Kugelkoordinatensystems bzw. im geographischen Zentrum GZ. Sie weist willkürlich aber zweckmäßig in Richtung Z-Achse.

Das Objekt 1 in einer beliebigen unbekannten Position $P_1$ wird zweckmäßig auf einem Längenkreis positioniert, hier auf dem Längengrad $\Phi=0$, dem Nullmeridian, und auf einem beliebigen Breitenkreis $\theta_1 = 90° - \alpha_1$. Damit liegt das Objekt 1 auf Position $P_1(R_1=1, \theta_1, \Phi_1 = 0)$. Sie entspricht der Position $p_1(x,y)$ auf der angenommen kartesischen Sensorebene, die im Kleinen winkeltreu mit den rechtwinkligen Breiten- und Längenkreisen nahe $P_1$ übereinstimmen. Zur Ermittlung dessen räumlicher Position bewegt sich die Bilderfassungsvorrichtung in der aktuellen Meßperiode, hier als Abtastperiode $\Delta t$ von $t_1$ bis $t_2$ mit ihrer vorgegebenen geradlinigen Geschwindigkeit $v_{tr}$ vom geographischen Zentrum GZ auf der Z-Achse bis Z = $\Delta L = v_{tr} \cdot \Delta t$. Dieser Schritt ist rechnerisch gleichwertig mit einer relativen Bewegung des Objekts von Position $P_1$ nach Position $P_2$ wie in Fig. 2a auch gleichermaßen dargestellt.

Die für die Berechnung des Objektabstandes relevanten Größen wie $\Delta\alpha_1$, $\Delta u_1$ $\alpha_1$ usw. sind hier ebenso wie in Fig. 1 eingetragen und werden genauso wie dort gemäß der abgeleiteten Gleichung 5 bezüglich der Länge des Abstandsvektors $R_1$ ausgewertet. Dieser Prozeß geschieht parallel für viele Objekte im Bilderfassungsbereich der Bilderfassungsvorrichtung. Da diese nur Winkel und Winkelgeschwindigkeiten zu messen vermag, kann sie überlagerte Ursachen, hier einerseits die Nutzung der durch translatorische Bewegungen $v_{tr}$ erzeugten Winkeländerungen und andererseits durch die von physikalischen Rotationen der Bilderfassungsvorrichtung, z.B. deren Rotationsbewegungen um die X-, Y- oder Z-Achse, nicht unterscheiden. Bei in Fahrzeugen montierten Bilderfassungsvorrichtungen werden sie z.B. durch Unebenheiten der Straße und durch Steigungen und Kurven verursacht. Gegenmaßnahmen wurden an anderer Stelle ausführlich beschrieben. Soweit diese physikalischen Rotationen auftreten und nicht orthogonal zu $\omega_{mes}$ als der Basis der Abstandsberechnung sind, verfälschen sie das Ergebnis und ihr Einfluß muß unbedingt verhindert werden. Für eine autonome Fahrzeugführung müssen sie ohnehin bestimmt werden, um bei der schrittweisen Navigation die Änderungen des sog. Kamerakoordinatensystems der Bilderfassungsvorrichtung dem Weltkoordinatensystem der Objektumgebung nachzuführen.

Dieser Prozeß wird anhand von Fig. 2b beispielhaft beschrieben. Fig. 2b zeigt eine weitgehend übereinstimmende Situation einer erfindungsgemäßen Abstandsbestimmung durch relative Bewegung der Bilderfassungsvorrichtung im dreidimensionalen Objektraum, dargestellt im Blick auf die XZ-Ebene, zugleich die Längenkreisebene des Nullmeridians, in der die relative Bewegung von Objekt und Bilderfassungsvorrichtung abläuft. Die Y-Achse steht wieder senkrecht auf der Papierebene. In diesem Ausführungsbeispiel ist die Bilderfassungsvorrichtung gegenüber deren Bewegungsachse bzw. Z-Achse um den Winkel β gedreht. Dadurch ändert sich das Meßprinzip nicht. Wenn anstelle der winkelverzerrenden Abbildung des ebenen Sensors 3 eine fast ideale Abbildung der Winkel z.B. mit einer sphärisch angepaßten Sensoroberfläche verwendet wird - wie in Fig. 1 angedeutet, hätte diese Drehung im Bilderfassungsbereich keine Auswirkungen auf das Meßergebnis. Durch facettenartige Kombination derartiger Bilderfassungsvorrichtungen können also rundum erfassende kugelförmige Bilderfassungssysteme gebildet werden. Bei Verwendung ebener Sensoren ist die in Fig. 1 mit dem Abstand von der optischen Achse wachsende und zu Gleichung 2 beschriebene Winkelverzerrung zu berücksichtigen.

Eine weitere anhand von Fig. 2b zu beschreibende Eigenschaft ist die optimale Kombination einmal der physikalischen Rotationsmessung von $\omega_{rot}$, die selektiv z.B. mittels Drehratensensoren nur diese Rotation mißt. Zum andern wird mit der Rotationsmessung nach dem beschriebenen Prinzip der Auswertung der Kreisbewegungsgleichung, hier erfindungsgemäß umgesetzt in ein Verfahren zur dreidimensionalen Erfassung des Objektraums, sowohl die nur schrittweise definierbare sogenannte Pseudorotation $\omega_{mes}$ durch translatorische Bewegungen als auch die physikalische Rotation $\omega_{rot}$, also deren vektorielle Addition erfaßt. Auf diese Weise sind beide Rotationsformen bekannt, einmal zur Messung der Objektabstände und zum andern für eine fortlaufende Navigation, bei der die je Abtastperiode gemessene Translation $\Delta L$ und die zugehörige Rotation $\omega_{rot}$, die zur Nachführung des sog. Kamerakoordinatensystem der Bilderfassungsvorrichtung im Weltkoordinatensystem dient und zugleich die Berechnung der Objektabstände immer wieder auf die einfache Startsituation zurückführt.

Zur Erhöhung der Meßgenauigkeit der Objektabstände ist der Einsatz der heute verfügbaren Bildstabilisierungssysteme zumeist im Bereich des Bilderzeugungselements 2 vorzuziehen, da große physikalische Rotationsstörungen den Objektabstand verfälschen können. In Fig. 2b wird der Einfluß einer physikalischen Rotation, die in der Abtastperiode zwischen $t_1$ und $t_2$ aufgetreten ist, veranschaulicht. Die bisher beschriebene Translation $\Delta L$ der Bilderfassungsvorrichtung wird in Fig. 2b durch eine zusätzliche entweder vorgegebene Rotation oder mittels integrierter Drehratensensoren gemessene Rotation z. B. um die Y-Achse ergänzt. Bisher wurde nach der reinen Translation von $t_1$ nach $t_2$ in Fig. 2a diese bzgl. des Objektes 1 und der Kamera - wie zuvor erläutert - im Weltkoordinatensystem registriert, wobei sie nach der Registrierung im Kamerakoordinatensystem zurückgesetzt wurde. Wie dargestellt kommt im nächsten Schritt von $t_2$ nach $t_3$ zur Translation $\Delta L$ eine Rotation um die Y-Achse $\Delta\alpha_{2roty}$ hinzu, die ebenfalls nach der Registrierung im Weltkoordinatensystem im Kamerakoordinatensystem rechnerisch und ggf. auch mechanisch nach der Kompensation im Bildstabilisierungssystem des Bilderzeugungselements zurückgesetzt wird. Auf diese Weise wird der Verlauf der relativen Trajektorie der Bilderfassungsvorrichtung zu den zunächst als statisch angenommenen Objekten der Umgebung mit jeweils kleinen Rotationen und Translationen beliebig veränderbar und meßbar.

In den Fig. 3 bis 6 und 13 sind die Gewichtungen der Sensorelemente 4 dargestellt, anhand derer das durch den Sensor 3 erfaßte Raumabbild einer Ortsfrequenzanalyse unterzogen werden kann; die Gewichtungen sind jeweils durch ein positives und ein negatives Vorzeichen gekennzeichnet, wobei die Sensorelementsignale im einfachsten Fall einfach mit diesen Vorzeichen als solchen bewertet werden. Durch die Gewichtung der Sensorelementsignale wird auf dem Sensor 3 in bestimmten Sensorrichtungen jeweils ein Ortsfrequenzfilter realisiert, so wie es zuvor im allgemeinen Zusammenhang und unter Bezugnahme auf Zeitfrequenzanalyse beschrieben worden ist.

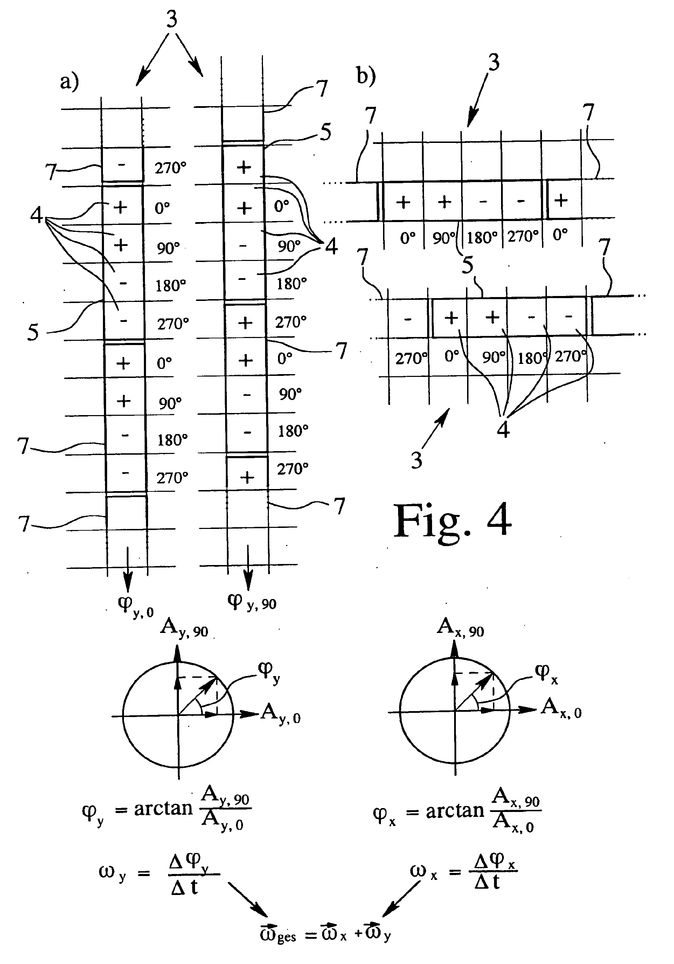

In Fig. 4 ist dargestellt, daß auf einem kartesisch parkettierten Sensor 3 Ortsfrequenzfilter in zwei verschiedenen Sensorrichtungen realisiert sind, nämlich in Fig. 4a) in "y-Richtung" und in Fig. 4b) in "x-Richtung". Es ist ferner zu erkennen, daß jeweils vier benachbarte Sensorelemente 4 zu einem Voxel 5 zusammengefaßt worden sind, wobei die Voxel 5 jeweils eine Ortsperiode des Ortsfrequenzfilters festlegen. In jeder Sensorrichtung werden mit Hilfe der Voxel 5 in den Ortsfrequenzfilterphasen $\varphi_0$, $\varphi_{90}$ die korrespondierenden Ortsfrequenzfilterkomponenten $A_{x,0}$, $A_{x,90}$ $A_{y,0}$ $A_{y,90}$ ermittelt, die im dargestellten Fall um 90° zueinander verschoben sind. In Fig. 4 sind zur Kenntlichmachung der Sensorrichtung die beiden Ortsfrequenzfilterphasen $\varphi_0$ und $\varphi_{90}$ bezeichnet als $\varphi_{x,0}$, $\varphi_{x,90}$ und $\varphi_{y,0}$, $\varphi_{y,90}$. Die in Sensorrichtung erhaltenen Ortsfrequenzfilterkomponenten $A_{x, 0}$, $A_{x, 90}$ $A_{y, 0}$ $A_{y, 90}$ lassen sich durch einfache inverse Winkelfunktionen in entsprechende Raumabbildphasen $\varphi$ umrechnen, die zur Kenntlichmachung der Sensorrichtung in Fig. 4 als $\varphi_x$ und $\varphi_y$ bezeichnet sind.

Durch zeitliche Abtastung der Ortsfrequenzfilter können so je Sensorrichtung zu unterschiedlichen Zeiten verschiedene Raumabbildphasen erhalten werden, wobei aus der Änderung der Raumabbildphasen $\Delta\varphi_x$ und $\Delta\varphi_y$ und der Abtastperiode $\Delta t$ die Raumabbildwinkelgeschwindigkeiten $\omega_x$, $\omega_y$ für die jeweiligen Sensorrichtungen resultieren. Bei allen dargestellten Verfahren werden diese erhaltenen Raumabbildwinkelgeschwindigkeiten $\omega_x$, $\omega_y$ vektoriell zu einer Gesamtraumabbildwinkelgeschwindigkeit $\omega_{ges}$ addiert, und diese Gesamtraumabbildwinkelgeschwindigkeit $\omega_{ges}$ wird der Ermittlung des Objektabstandes R zugrundegelegt.

Bei allen dargestellten Ausgestaltungen des erfindungsgemäßen Verfahrens werden die Gewichtungen von Sensorelementsignalen der Sensorelemente 4 eines Voxels 5 in einer Sensorrichtung in einer Ortsfrequenzfilterphase so gewählt, daß eine möglichst gute Sinus-Approximation 6 realisiert wird, wobei dabei insbesondere auch die Geometrie der beteiligten Sensorelemente berücksichtigt wird.

In den Fig. 3 bis 5 und 13 sind kartesisch parkettierte Sensoren 3 dargestellt, wobei in Fig. 3 ein Voxel aus zwei benachbarten Sensorelementen 4 besteht und in Fig. 4 jeweils ein Voxel 5 aus vier benachbarten Sensorelementen 4 besteht. Die Sinus-Approximation 6 besteht hier darin, daß jeweils eine Hälfte der Sensorelemente 4 mit einem Vorzeichen und die andere Hälfte der Sensorelemente 4 mit dem anderen Vorzeichen gewichtet ist; die Sinus-Approximation ist hier also vergleichsweise grob, es sind hauptsächlich die Nulldurchgänge einer SinusSchwingung gut getroffen. Es hat sich jedoch gezeigt, daß auch eine solche Sinus-Approximation ausreichend ist zur Realisierung eines Ortsfrequenzfilters.

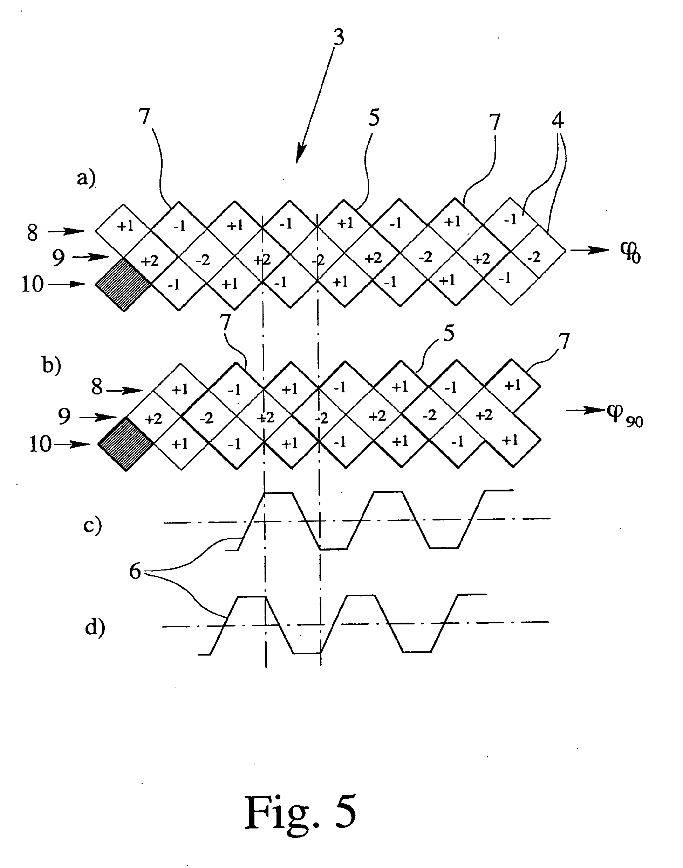

Bei der in Fig. 5 dargestellten kartesischen Parkettierung des Sensors 3 wird durch eine noch näher zu erläuternde diagonale Auslese des Sensors 3 und durch geschickte Ausgestaltung von Voxeln 5 eine deutlich bessere Sinus Approximation 6 erzielt, nämlich durch trapezförmige Kurvenverläufe angenäherte SinusKurven.

In allen dargestellten Ausführungsbeispielen sind die - lediglich in Fig. 5 dargestellten - Sinus-Approximationen 6 der Gewichtungen der Sensorelementsignale in den wenigstens zwei Ortsfrequenzfilterphasen $\varphi_0$, $\varphi_{90}$ in einer Sensorrichtung relativ zueinander um im wesentlichen eine viertel Ortsperiode zueinander phasenverschoben, so daß die Ortsfrequenzfilterphasen $\varphi_0$, $\varphi_{90}$ im wesentlichen der Inphase- und Quadratur-Komponente einer I/Q-Auswertung bei der Ermittlung der Raumabbildphase $\varphi$ entsprechen. Die Voxel in Fig. 5a korrespondieren mit der Gewichtungskurve 5d und die Voxel in Fig. 5b korrespondieren mit der Gewichtungskurve 5c.

In Fig. 3 ist ein Ausführungsbeispiel des Verfahrens dargestellt, bei dem die Ortsfrequenzfilterung in wenigstens einer Sensorrichtung in verschiedenen Ortsfrequenzfilterphasen - hier mit $\varphi_{x,0}$, $\varphi_{x,90}$, $\varphi_{y,0}$ und $\varphi_{y,90}$ bezeichnet - durchgeführt wird, indem zwei Sensorelemente 4 einem Voxel 5 - unabhängig von der auszuwertenden Ortsfrequenzfilterphase $\varphi_0$, $\varphi_{90}$ - fest zugeordnet werden und das Raumabbild in und/oder entgegen der einen Sensorrichtung entsprechend der zu erzielenden Ortsfrequenzfilterkomponenten in den Ortsfrequenzfilterphasen $\varphi_0$, $\varphi_{90°}$ verschoben wird, was einer Raumabbildverschiebung entspricht. In den Fig. 3a) bis 3d) ist in jedem der dargestellten Ausschnitte des Sensors 3 jeweils ein Sensorelement dunkel hervorgehoben, um kenntlich zu machen, daß es sich dabei in allen Ausschnitten des Sensors 3 um dasselbe Sensorelement handelt. Es ist bei den Fig. 3a) und 3b) ohne weiteres zu erkennen, daß das dargestellte Voxel 5 fest zwei Sensorelementen 4 zugeordnet ist, obwohl in Fig. 3a) in x-Richtung des Sensors 3 die Ortsfrequenzfilterphase $\varphi_{x,0}$ ausgewertet wird und in Fig. 3b) in x-Erstreckung des Sensors 3 die Ortsfrequenzfilterphase $\varphi_{x,90}$ ausgewertet wird. Um auf Grundlage dieser unveränderlichen, durch die Vorzeichen angedeuteten Gewichtungen der Sensorelementsignale der Sensorelemente 4 eine Ortsfrequenzanalyse in zwei Phasen vornehmen zu können, wird das Raumabbild zwischen den Fig. 3a) und 3b) um eine halbe Länge eines Sensorelements 4 nach rechts verschoben, was durch das gestrichelte Kästchen angedeutet ist. Das Raumabbild erstreckt sich selbstverständlich über den gestrichelt dargestellten Ausschnitt des Raumabbildes hinaus, die Darstellung dient lediglich der klaren Kenntlichmachung der Raumabbildverschiebung. Um beide Ortsfrequenzfilterphasen $\varphi_0$, $\varphi_{90}$ auswerten zu können, muß der Sensor 3, der im dargestellten Fall ein in CMOS-Technologie realisierter Bildsensor ist, tatsächlich zweimal belichtet werden, einmal pro auszuwertender Ortsfrequenzfilterphase.

In den Fig. 3c) und 3d) ist eine vergleichbare Situation nochmals dargestellt zur Ermittlung zweier Ortsfrequenzfilterkomponenten in den Ortsfrequenzfilterphasen in y-Erstreckung des Sensors 3, wobei hier die Ortsfrequenzfilterphasen $\varphi_{y,0}$ und $\varphi_{y,90}$ des Raumabbildes ermittelt werden. Durch Anwendung des Verfahrens der Raumabbildverschiebung lassen sich insgesamt also alleine mit einem Gesamtvoxel mit nur vier Sensorelementen 4 zwei Raumabbildphasen in x- und y-Richtung des Sensors 3 ermitteln, wodurch eine vollständige Ermittlung der notwendigen Raumabbildwinkelgeschwindigkeiten $\omega_x$ und $\omega_y$ möglich ist. Aus diesen einzelnen, senkrecht zueinander stehenden Raumabbildwinkelgeschwindigkeiten $\omega_x$ und $\omega_y$ ist dann die Gesamtraumabbildwinkelgeschwindigkeit $\omega_{ges}$ ermittelbar, aus der sich dann auch der Objektabstand R desjenigen Objektes 1 ergibt, das unter dem eindeutigen Ablagewinkel $\alpha$ auf das dargestellte Voxel 5 abgebildet wird.

In den Fig. 4 bis 6 und 13 sind verschiedene Ausgestaltungen eines Verfahrens zur Bestimmung eines Objektabstandes dargestellt, bei dem die Ortsfrequenzfilterung in wenigstens einer Sensorrichtung in verschiedenen Ortsfrequenzfilterphasen $\varphi_0$ und $\varphi_{90}$ durchgeführt wird, indem je auszuwertender Ortsfrequenzfilterphase $\varphi_0$ und $\varphi_{90}$ - zumindest teilweise - verschiedene Sensorelemente 4 einem Voxel 5 - Phasenvoxel - fest zugeordnet werden, wobei die derart entstehenden Phasenvoxel in der auszuwertenden Sensorrichtung gegeneinander ortsphasenverschoben sind, was einer Voxelverschiebung entspricht.

Bei dem Ausführungsbeispiel gemäß Fig. 4 werden wiederum rechteckige Sensorelemente 4 verwendet, wobei die Abbildung des Raumes auf den Sensor 3 starr ist, also weder durch eine Raumabbildverschiebung noch durch eine Sensorverschiebung beeinflußt werden kann. Die Bewegung des Raumabbildes auf dem Sensor 3 kommt lediglich durch die Relativbewegung der Bilderfassungsvorrichtung zu den abgebildeten Objekten 1 zustande; das Raumabbild bzw. ein Ausschnitt des Raumabbildes ist in Fig. 4 nicht dargestellt. In Fig. 4a ist ein und derselbe Ausschnitt des Sensors 3 zweimal dargestellt, wobei das Voxel 5 in y-Erstreckung des Sensors 3 ausgerichtet ist und daher die Ortsfrequenzfilterphasen $\varphi_{y,0}$ und $\varphi_{y,90}$ in y-Richtung des Sensors liefert. Es ist zu erkennen, wie in Abhängigkeit von der auszuwertenden Ortsfrequenzfilterphase $\varphi_{y,0}$ oder $\varphi_{y,90}$ die Gewichtung der Sensorelementsignale der Sensorelemente 4 angepaßt wird. Die dargestellten Voxel 5 bestehen jeweils aus vier Sensorelementen 4, wobei jedes der Sensorelemente 4 einen Ortsperiodenumfang von 90° hat. Durch relative Verschiebung der Gewichtungen der Sensorelementsignale um ein Sensorelement 4 wird daher eine Phasenverschiebung von 90° erzielt. Bei diesem Verfahren ist gegenüber dem Verfahren der Raumbildverschiebung keine doppelte Belichtung des Sensors 3 nötig, vielmehr reicht es, die erfaßten Intensitäten der Sensorelementsignale der Sensorelemente 4 des Sensors 3 gemäß der Darstellung in Fig. 4 verändert zu gewichten, um zu den gewünschten Auswertungen der Ortsfrequenzfilterphasen $\varphi_{y,0}$ und $\varphi_{y,90}$ zu gelangen. In Fig. 4b ist dieselbe Situation nochmals dargestellt für die Auswertung der Ortsfrequenzfilterphasen $\varphi_{x,0}$ und $\varphi_{x,90}$ in x-Richtung des Sensors 3.

In Fig. 5 ist ein weiteres, sehr vorteilhaftes Ausführungsbeispiel des Verfahrens dargestellt, bei dem die Sensorelemente 4 des Sensors 3 rechteckig - im dargestellten Fall quadratisch - ausgestaltet werden und eine im wesentlichen orthogonale Parkettierung des Sensors 3 bilden, wobei eine durch Ortsfrequenzfilterung auszuwertende Sensorrichtung x, y in Diagonalerstreckung der rechteckigen Sensorelemente 4 gewählt wird und je sechs Sensorelemente 4 zu einem dreizeiligen Voxel 5 bzw. Phasenvoxel 5 mit je zwei Sensorelementen 4 in jeder Voxelzeile 8, 9, 10 zur Auswertung einer Ortsfrequenzfilterphase $\varphi_0$, $\varphi_{90}$ zusammengefaßt werden. Die Voxelzeilen 8, 9, 10 in den beiden Darstellungen in den Fig. 5a und 5b entsprechen wiederum ein und demselben Ausschnitt des Sensors 3, wobei zur besseren Orientierung wiederum ein Sensorelement 4 dunkel dargestellt ist. In den Fig. 5b und 5c sind die Sinus-Approximationen 6 dargestellt, wobei die Sinus-Approximation 6 gemäß Fig. 5d aus der Gewichtung der Sensorelementsignale gemäß der oberen Darstellung in Fig. 5a hervorgeht und entsprechend die Sinus-Approximation 6 in Fig. 5c aus der Gewichtung der Sensorelementsignale hervorgeht gemäß der Darstellung in Fig. 5b.

Zur Ermittlung der ersten Ortsfrequenzfilterphase $\varphi_0$ werden die Sensorelementsignale der jeweils beiden Sensorelemente 4 der drei Voxelzeilen 8, 9, 10 mit umgekehrten Vorzeichen gewichtet, wobei die drei Sensorelemente 4 mit den jeweils mit gleichen Vorzeichen gewichteten Sensorelementsignalen pfeilförmig in die eine Richtung der Diagonalerstreckung weisend angeordnet werden. Zur Ermittlung der zweiten Ortsfrequenzfilterphase $\varphi_{90}$ werden unter Beibehaltung der Sensorelemente 4 der mittleren Voxelzeile 9 und der Gewichtung der Sensorelementsignale der Sensorelemente 4 der mittleren Voxelzeile 9 die beiden Sensorelemente 4 der oberen Voxelzeile 8 und der unteren Voxelzeile 9 so angeordnet und ihre Sensorelementsignale werden derart mit Vorzeichen gewichtet, daß die drei Sensorelemente 4 mit den jeweils mit gleichem Vorzeichen gewichteten Sensorelementsignale pfeilförmig in die andere Richtung der Diagonalerstreckung weisen. Die hierbei insgesamt vier möglichen Kombinationen erfassen jeweils um 90° verschobene Phasenlagen der jeweiligen durch Gewichtung bestimmten spektralen Filterortsfrequenz bzw. Filterortsperiode und können bei der Auswertung zur Fehlerkorrektur z.B. von Unsymmetrien genutzt werden.

In dem Ausführungsbeispiel gemäß Fig. 5 werden die Sensorelementsignale der Sensorelemente 4 der mittleren Voxelzeile 9 betragsmäßig doppelt so stark gewichtet wie die Sensorelementsignale der Sensorelemente 4 der oberen Voxelzeile 8 und der unteren Voxelzeile 10. Durch diese Gewichtung werden die Sinus-Approximationen gemäß Fig. 5b erzielt, die eine sehr gute Approximation darstellen, insbesondere wenn berücksichtigt wird, daß rechteckige Sensorelemente 4 verwendet werden, so wie sie in den allermeisten der handelsüblichen Bildsensoren Verwendung finden. Es ist möglich, die gleiche Struktur auf dem gleichen Sensor 3 auch als kartesisches Ortsfrequenzfilter einzusetzen, allerdings mit den Nachteilen der größeren kartesischen Ortsperiode $\lambda_k = 4p$ (4xPixelweite) gegenüber der diagonalen Ortsfrequenzfilterstruktur mit $\text{mit } \lambda_d = 2\sqrt{2} \cdot p,$ ferner mit der schlechteren rechteckförmigen Sinusapproximation und der geringeren Durchdringung der Gewichtungsbereiche für die innere 0°-Phase und die äußere 90°-Phase.

In einer weiteren, hier nicht näher dargestellten Ausgestaltung des Verfahrens gemäß Fig. 5 ist vorgesehen, daß eine zweite auszuwertende Sensorrichtung vorgesehen ist, die in der zweiten orthogonalen Diagonalerstreckung der rechteckigen Sensorelemente 4 orientiert ist. Dies ist ohne weiteres realisierbar, da es lediglich auf die richtige Auswahl und Gewichtung der Sensorelemente und der mit ihnen korrespondierenden Sensorelementsignale ankommt.

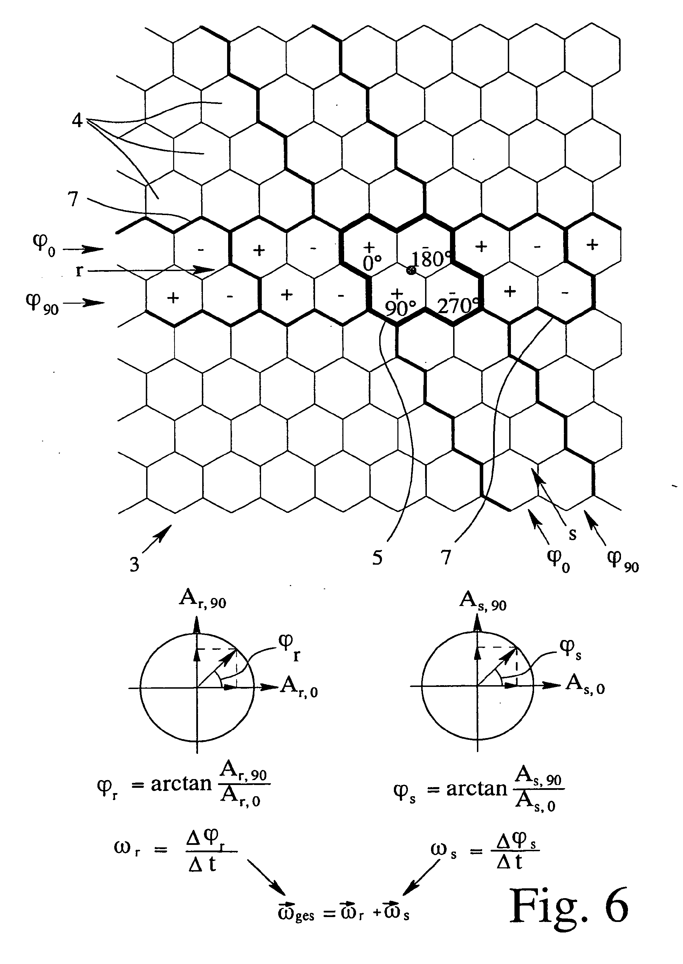

Bei dem Ausführungsbeispiel gemäß Fig. 6 werden die Sensorelemente 4 des Sensors 3 hexagonal ausgestaltet - sie bilden sogenannte Hexel - so daß die Hexel eine hexagonale Parkettierung des Sensors 3 bilden, wobei je durch Ortsfrequenzfilterung auszuwertender Sensorrichtung r, s, t je vier Hexel zu einem zweizeiligen Voxel 5 zusammengefaßt werden, wobei die in einer Zeile des Voxels 5 benachbarten Hexel ein Ortsfrequenzfilter zur Auswertung jeweils einer Ortsfrequenzfilterphase $\varphi_0$, $\varphi_{90}$ bilden und dazu insbesondere mit unterschiedlichen Vorzeichen gewichtet sind. Dieses Ausführungsbeispiel stellt einen Sonderfall bei den Ausführungsbeispielen gemäß den Fig. 4, 5 und 6 dar, bei dem die unterschiedlichen Phasenvoxel keine gemeinsamen Sensorelemente 4 aufweisen. In diesem Ausführungsbeispiel können deshalb mit einer Auswertung sofort beide Ortsfrequenzfilterphasen $\varphi_0$ und $\varphi_{90}$ ermittelt werden. Es ist vorteilhaft, wenn das Voxel 5 in wenigstens zwei Sensorrichtungen einer Ortsfrequenzfilterung unterzogen wird, wobei die Sensorrichtungen aufgrund der hexagonalen Parkettierung im wesentlichen einen Winkel von 60° oder 120° einschließen. Im dargestellten Ausführungsbeispiel gemäß Fig. 6 wird eine Ortsfrequenzfilterung in drei Sensorrichtungen vorgenommen, nämlich im wesentlichen in den Richtunggen 0°, 60° und 120°.

In den Fig. 4 bis 7 ist ferner dargestellt, daß zur Feststellung der Ortsfrequenzfilterphasen $\varphi_0$, $\varphi_{90}$ eines Voxels 5 in einer Sensorrichtung nicht nur die gewichteten Sensorelementsignale des betreffenden, die Ortsperiode definierenden Voxels 5 herangezogen werden, sondern zusätzlich auch die Sensorsignale von wenigstens einer in der auszuwertenden Sensorrichtung erstreckten ortsperiodischen Wiederholung des zentralen Voxels 5, nämlich der Nebenvoxel 7, wobei die korrespondierenden Sensorsignale des zentralen Voxels 5 und der Nebenvoxel 7 aufsummiert werden, was hier im einzelnen nicht dargestellt ist.

Im einzelnen ebenfalls nicht weiter dargestellt, dennoch bei den dargestellten Ausführungsbeispielen realisiert, ist, daß die Sensorsignale der Nebenvoxel 7 schwächer gewichtet werden als die korrespondierenden Sensorsignale des zentralen Voxels 5, nämlich mit zunehmendem Abstand von dem zentralen Voxel 5 abnehmend gewichtet werden. In den dargestellten Ausführungsbeispielen werden die Sensorsignale der Nebenvoxel 7 gemäß einer Gauskurve abnehmend gewichtet.

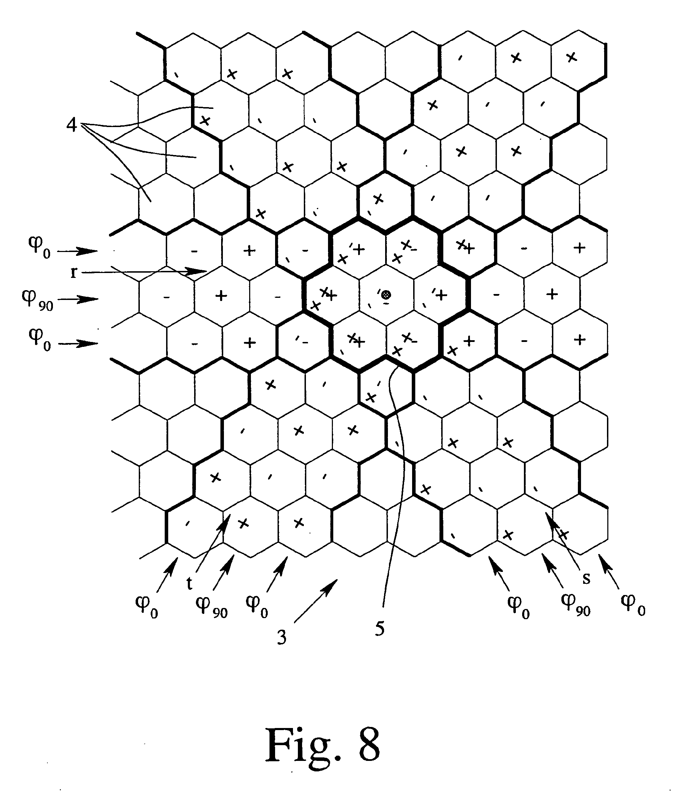

In Fig. 8 ist ein Ausführungsbeispiel dargestellt, bei dem die Sensorelemente 4 des Sensors 3 hexagonal ausgestaltet sind - Hexel - und eine hexagonale Parkettierung des Sensors 3 bilden, wobei je durch Ortsfrequenzfilterung auszuwertender Sensorrichtung r, s, t wenigstens je sechs Hexel zu einem dreizeiligen Voxel 5 zusammengefaßt werden, wobei die in der mittleren Zeile des Voxels 5 benachbarten Hexel ein Ortsfrequenzfilter zur Auswertung in einer Ortsfrequenzfilterphase $\varphi_{90}$ bilden und die in den beiden äußeren Zeilen des Voxels 5 benachbarten Hexel ein Ortsfrequenzfilter zur Auswertung in einer anderen Ortsfrequenzfilterphase $\varphi_0$ bilden, dabei werden die korrespondierenden Sensorsignale der Sensorelemente 4 wie zuvor mit unterschiedlichen Vorzeichen gewichtet. Das fett umrandete Gesamtvoxel setzt sich aus den Zentralvoxeln im Kreuzungspunkt von Voxelzeilen in den unterschiedlichen Sensorrichtungen zusammen und ist bzgl. der Sensorrichtungen ganz symmetrisch, weshalb die Schwerpunkte der Voxel 5 in unterschiedlichen Sensorrichtungen identisch sind.

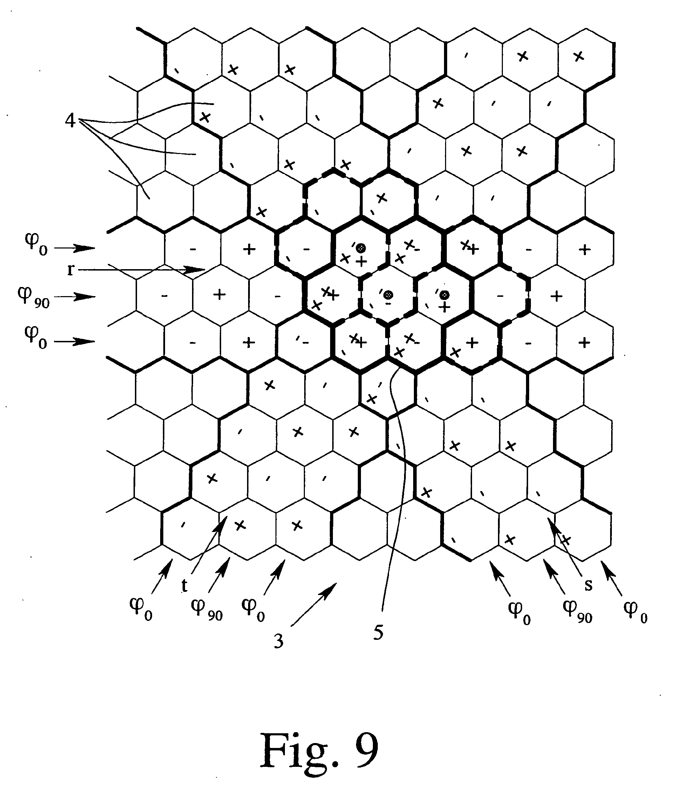

In den Fig. 9 bis 12 sind hexagonale Parkettierungen der Art gemäß Fig. 8 dargestellt, wobei verschieden dichte Auswertungen (Abstandsüberdeckungen) realisiert sind, indem die Zentralvoxel mit unterschiedlichen Überdeckungen angeordnet sind. Mit den Auswertungen gemäß den Fig. 9 bis 12 werden Dichten der Abstandsbestimmung erzielt von 100%, 25%, 11,1% und 6,25%.

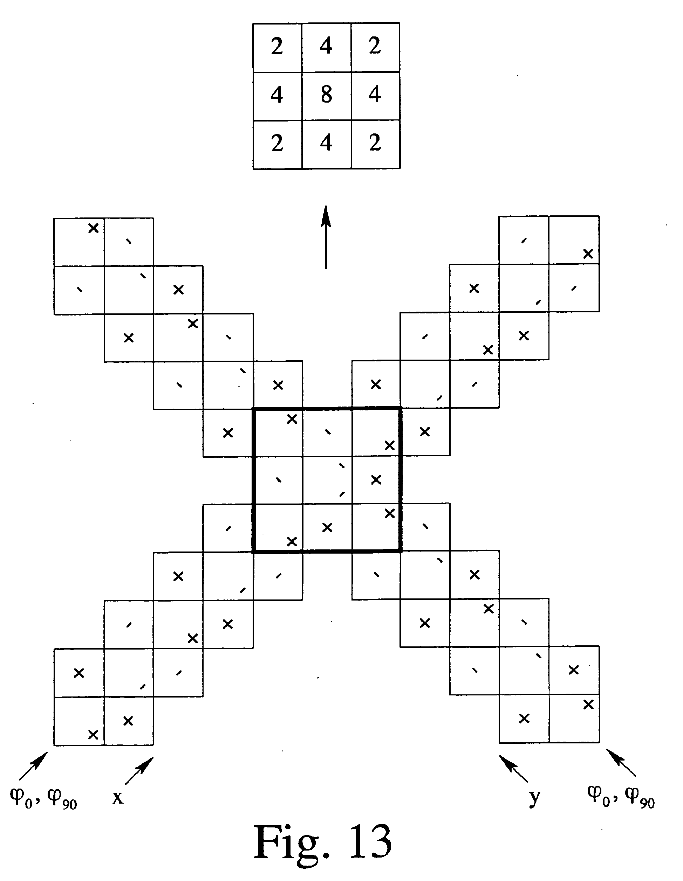

Fig. 13 zeigt ein Ausführungsbeispiel mit quadratischen Sensorelementen 4 und einem Gesamtvoxel in der Kreuzungsstelle der Voxelzeilen mit drei mal drei Sensorelementen 4, deren Sensorelementsignale mit der angegebenen Gewichtung für das Zentralvoxel beim Auslesen bewertet werden.

**Patentansprüche**

1. Verfahren zur Bestimmung des Abstandes (R) wenigstens eines im Raum befindlichen Objektes (1) zu einer Bilderfassungsvorrichtung mit einem Bilderzeugungselement (2) und einem Sensor (3), wobei der Sensor (3) aus mehreren im wesentlichen flächig nebeneinander angeordneten Sensorelementen (4) besteht, das Bilderzeugungselement (2) wenigstens einen Teil des Raumes auf den Sensor (3) abbildet - Raumabbild -, wobei ein von dem Bilderzeugungselement (2) unter einem bestimmten Ablagewinkel ($\alpha$) erfaßter Raumteil auf ein bestimmtes Sensorelement (4) abgebildet wird und von den Sensorelementen (4) entsprechende Sensorelementsignale erzeugt werden,
   **dadurch gekennzeichnet,**
   **daß** die Relativgeschwindigkeit (v) der Bewegung der Bilderfassungsvorrichtung zu dem Objekt (1) ermittelt wird,
   **daß** durch Auswertung der Sensorelementsignale wenigstens zweier Sensorelemente (4) - Voxel (5) - eine Raumabbildwinkelgeschwindigkeit ($\omega_{mes,sensor}$) ermittelt wird, daß aus der Raumabbildwinkelgeschwindigkeit ($\omega_{mes,sensor}$) des auf die Sensorelemente (4) abgebildeten Objekts (1) die orthogonale Objektwinkelgeschwindigkeit ($\omega_{mes}$) des von der Bilderfassungsvorrichtung auf das Objekt (1) weisenden Objektabstandsvektors gewonnen wird und
   **daß** über die Relativgeschwindigkeit (v) der Bilderfassungsvorrichtung, die orthogonale Objektwinkelgeschwindigkeit ($\omega_{mes}$) und den Ablagewinkel ($\alpha$) des Objekts (1) der Objektabstand (R) ermittelt wird.

2. Verfahren nach Anspruch 1, **dadurch gekennzeichnet, daß** die Raumabbildwinkelgeschwindigkeit ($\omega_{mes,sensor}$) ermittelt wird, indem durch geeignete Gewichtung der Sensorelementsignale wenigstens zweier Sensorelemente (4) - Voxel (5) - in wenigstens einer Sensorrichtung (x, y, r, s, t) ein Ortsfrequenzfilter gebildet wird, wobei das Ortsfrequenzfilter mindestens die Sensorelementsignale des Voxels (5) einer Ortsfrequenzfilterung in wenigstens zwei verschiedenen Ortsfrequenzfilterphasen ($\varphi_0$, $\varphi_{90}$) unterzieht, und aus den erhaltenen korrespondierenden Ortsfrequenzfilterkomponenten ($A_0$, $A_{90}$) eine Raumabbildphase ($\varphi$) des Voxels (5) ermittelt wird, daß durch zeitliche Signalabtastung des Ortsfrequenzfilters wenigstens zwei Raumabbildphasen ($\varphi$) des Voxels (5) ermittelt werden und aus den zeitlich beabstandeten Raumabbildphasen ($\varphi$) die Raumabbildwinkelgeschwindigkeit ($\omega_{mes,sensor}$) ermittelt wird.

3. Verfahren nach Anspruch 1 oder 2, **dadurch gekennzeichnet, daß** zur Ermittlung der Raumabbildwinkelgeschwindigkeit ($\omega_{mes,sensor}$) und damit des Objektabstandes (R) im wesentlichen nur die Translationskomponente der Bewegung der Bilderfassungsvorrichtung herangezogen wird, insbesondere indem enthaltene Rotationskomponenten ($\omega_{rot}$) der Bewegung der Bilderfassungsvorrichtung durch Stabilisierung der Bilderfassungsvorrichtung kompensiert und/oder enthaltene Rotationskomponenten ($\omega_{rot}$) der Bewegung der Bilderfassungsvorrichtung erfaßt und eliminiert werden.

4. Verfahren nach einem der Ansprüche 1 bis 3, **dadurch gekennzeichnet, daß** bei Ermittlung von Raumabbildwinkelgeschwindigkeiten ($\omega_x$, $\omega_y$) in mehr als einer Sensorrichtung (x, y, r, s, t) die erhaltenen Raumabbildwinkelgeschwindigkeiten ($\omega_x$, $\omega_y$) vektoriell zu einer Gesamtraumabbildwinkelgeschwindigkeit ($\omega_{ges}$) addiert werden und die Gesamtraumabbildwinkelgeschwindigkeit ($\omega_{ges}$) der Ermittlung des Objektabstandes (R) zugrundegelegt wird.

5. Verfahren nach einem der Ansprüche 1 bis 4, **dadurch gekennzeichnet, daß** die Schwerpunkte der in verschiedenen Sensorrichtungen (x, y, r, s, t) zur Berechnung des Objektabstandes (R) für einen bestimmten Raumteil gebildeten Voxel (5) nahe zusammen liegen, insbesondere im wesentlichen identisch sind.

6. Verfahren nach einem der Ansprüche 1 bis 5, **dadurch gekennzeichnet, daß** die Gewichtungen von Sensorelementsignalen der Sensorelemente (4) eines Voxels (5) in einer Sensorrichtung (x, y, r, s, t) in einer Ortsfrequenzfilterphase ($\varphi_0$, ($\varphi_{90}$) unter Berücksichtigung der Geometrie der beteiligten Sensorelemente (4) so gewählt wird, daß eine möglichst gute Sinus-Approximation (6) realisiert wird.

7. Verfahren nach Anspruch 6, **dadurch gekennzeichnet, daß** die Sinus-Approximationen (6) der Gewichtungen der Sensorelementsignale in den wenigstens zwei Ortsfrequenzfilterphasen ($\varphi_0$, $\varphi_{90}$) in einer Sensorrichtung (x, y, r, s, t) relativ zueinander um im wesentlichen eine viertel Ortsperiode zueinander phasenverschoben sind.

8. Verfahren nach einem der Ansprüche 1 bis 7, **dadurch gekennzeichnet, daß** die Ortsfrequenzfilterung in wenigstens einer Sensorrichtung (x, y, r, s, t) in verschiedenen Ortsfrequenzfilterphasen ($\varphi_0$, $\varphi_{90}$) durchgeführt wird, indem wenigstens ein Sensorelement (4) einem Voxel (5) - unabhängig von der auszuwertenden Ortsfrequenzfilterphase ($\varphi_0$, $\varphi_{90}$) - fest zugeordnet wird und der Sensor (3) in und/oder entgegen der einen Sensorrichtung (x, y, r, s, t) entsprechend der zu erzielenden Ortsfrequenzfilterkomponente ($A_0$, $A_{90}$) in der jeweiligen Ortsfrequenzfilterphase ($\varphi_0$, $\varphi_{90}$) verschoben wird - Sensorverschiebung - und/oder das Raumabbild in und/oder entgegen der einen Sensorrichtung (x, y, r, s, t) entsprechend der zu erzielenden Ortsfrequenzfilterkomponente ($A_0$, $A_{90}$) in der jeweiligen Ortsfrequenzfilterphase ($\varphi_0$, $\varphi_{90}$) verschoben wird - Raumabbildverschiebung -, wobei die Raumabbildverschiebung auf dem Sensor (3) insbesondere durch Lageänderung des Bilderfassungselements (2) erzielt wird.

9. Verfahren nach einem der Ansprüche 1 bis 7, **dadurch gekennzeichnet, daß** die Ortsfrequenzfilterung in wenigstens einer Sensorrichtung (x, y, r, s, t) in verschiedenen Ortsfrequenzfilterphasen ($\varphi_0$, $\varphi_{90}$) durchgeführt wird, indem je auszuwertender Ortsfrequenzfilterphase ($\varphi_0$, ($\varphi_{90}$) - zumindest teilweise - verschiedene Sensorelemente (4) einem Voxel (5) - Phasenvoxel - fest zugeordnet werden, wobei die derart entstehenden Phasenvoxel in der auszuwertenden Sensorrichtung (x, y, r, s, t) gegeneinander ortsphasenverschoben sind - Voxelverschiebung -.

10. Verfahren nach einem der Ansprüche 1 bis 9, **dadurch gekennzeichnet, daß** zur Feststellung der Ortsfrequenzfilterkomponenten ($A_0$, $A_{90}$) der Ortsfrequenzfilterphasen ($\varphi_0$, $\varphi_{90}$) eines Voxels (5) in einer Sensorrichtung (x, y, r, s, t) nicht nur die gewichteten Sensorelementsignale des betreffenden, die Ortsperiode definierenden Voxels (5) - Zentralvoxel - herangezogen werden, sondern zusätzlich auch die Sensorsignale von wenigstens einer in der auszuwertenden Sensorrichtung (x, y, r, s, t) liegenden ortsperiodischen Wiederholung des zentralen Voxels (5) - Nebenvoxel (7) -, so daß das Zentralvoxel (5) und das Nebenvoxel (7) eine Voxelzeile definieren, wobei insbesondere die korrespondierenden Sensorsignale des Zentralvoxels (5) und des Nebenvoxels (7) aufsummiert werden.

11. Verfahren nach Anspruch 10, **dadurch gekennzeichnet, daß** die Sensorsignale der Nebenvoxel (7) schwächer gewichtet werden als die korrespondierenden Sensorsignale des Zentralvoxels (5), insbesondere mit zunehmendem Abstand von dem Zentralvoxel (5) abnehmend gewichtet werden, insbesondere gemäß einer glockenförmigen Gewichtungskurve, vorzugsweise gemäß einer harmonischen Gewichtungskurve, vorzugsweise gemäß einer Gewichtungskurve ohne Gleichanteil.

12. Verfahren nach einem der Ansprüche 1 bis 11, **dadurch gekennzeichnet, daß** die Sensorelemente (4) des Sensors (3) hexagonal ausgestaltet werden - Hexel - und eine hexagonale Parkettierung des Sensors (3) bilden, wobei je durch Ortsfrequenzfilterung auszuwertender Sensorrichtung (r, s, t) wenigstens je vier Hexel zu einem zweizeiligen Voxel (5) zusammengefaßt werden, insbesondere wobei die in einer Zeile des Voxels (5) benachbarten Hexel ein Ortsfrequenzfilter zur Auswertung jeweils einer Ortsfrequenzfilterphase ($\varphi_0$, $\varphi_{90}$) bilden und dazu insbesondere mit unterschiedlichen Vorzeichen gewichtet werden.

**13.** Verfahren nach einem der Ansprüche 1 bis 11, **dadurch gekennzeichnet, daß** die Sensorelemente (4) des Sensors (3) hexagonal ausgestaltet werden - Hexel - und eine hexagonale Parkettierung des Sensors (3) bilden, wobei je durch Ortsfrequenzfilterung auszuwertender Sensorrichtung (r, s, t) wenigstens je sechs Hexel zu einem dreizeiligen Voxel (5) zusammengefaßt werden, insbesondere wobei die in der mittleren Zeile des Voxels (5) benachbarten Hexel ein Ortsfrequenzfilter zur Auswertung in einer Ortsfrequenzfilterphase ($\varphi_{90}$) bilden und die in den beiden äußeren Zeilen des Voxels (5) benachbarten Hexel ein Ortsfrequenzfilter zur Auswertung in einer anderen Ortsfrequenzfilterphase ($\varphi_0$) bilden, wobei die korrespondierenden Sensorsignale der Sensorelemente (4) dazu insbesondere mit unterschiedlichen Vorzeichen gewichtet werden.

**14.** Verfahren nach Anspruch 12 oder 13, **dadurch gekennzeichnet, daß** das Voxel (5) in zwei Sensorrichtungen (r, s) einer Ortsfrequenzfilterung unterzogen wird, wobei die Sensorrichtungen (r, s) im wesentlichen einen Winkel von 120° bzw. 240° einschließen oder daß das Voxel (5) in drei Sensorrichtungen (r, s, t) einer Ortsfrequenzfilterung unterzogen wird, wobei die Sensorrichtungen im wesentlichen einen Winkel von jeweils 120° einschließen.

**15.** Verfahren nach einem der Ansprüche 1 bis 11, **dadurch gekennzeichnet, daß** die Sensorelemente (4) des Sensors (3) rechteckig, insbesondere quadratisch ausgestaltet werden und eine im wesentlichen orthogonale Parkettierung des Sensors (3) bilden, wobei wenigstens eine erste durch Ortsfrequenzfilterung auszuwertende Sensorrichtung (x, y) in Diagonalerstreckung der rechteckigen Sensorelemente (4) gewählt wird, und je sechs Sensorelemente (4) zu einem dreizeiligen Voxel (5) bzw. Phasenvoxel mit je zwei Sensorelementen (4) in jeder Zeile (8, 9, 10) des Voxels (5) zur Auswertung in einer Ortsfrequenzfilterphase ($\varphi_0$, $\varphi_{90}$) zusammengefaßt werden.

**16.** Verfahren nach Anspruch 15, **dadurch gekennzeichnet, daß** zur Ermittlung der Ortsfrequenzfilterkomponente ($A_0$) einer ersten Ortsfrequenzfilterphase ($\varphi_0$) die Sensorelementsignale der jeweils beiden Sensorelemente (4) der drei Zeilen (8, 9, 10) des Voxels (5) bzw. Phasenvoxels mit umgekehrten Vorzeichen gewichtet werden, wobei die drei Sensorelemente (4) mit den jeweils mit gleichem Vorzeichen gewichteten Sensorelementsignalen pfeilförmig in die eine Richtung der Diagonalerstreckung weisend angeordnet werden und daß zur Ermittlung der Ortsfrequenzfilterkomponente ($A_{90}$) einer zweiten Ortsfrequenzfilterphase ($\varphi_{90}$) unter Beibehaltung der Sensorelemente (4) der mittleren Zeile (9) des Voxels (5) bzw. Phasenvoxels und der Gewichtung der Sensorelementsignale der Sensorelemente (4) der mittleren Zeile (9) des Voxels (5) bzw. Phasenvoxels die beiden Sensorelemente (4) der oberen Zeile (8) und der unteren Zeile (9) des Voxels (5) bzw. des Phasenvoxels so angeordnet werden und ihre Sensorelementsignale derart mit Vorzeichen gewichtet werden, daß die drei Sensorelementen (4) mit den jeweils mit gleichem Vorzeichen gewichteten Sensorelementsignalen pfeilförmig in die andere Richtung der Diagonalerstreckung weisen.

**17.** Verfahren nach Anspruch 15 oder 16, **dadurch gekennzeichnet, daß** die Sensorelementsignale der Sensorelemente (4) der mittleren Zeile (9) des Voxels (5) bzw. des Phasenvoxels betragsmäßig im wesentlichen doppelt so stark gewichtet werden wie die Sensorelementsignale der Sensorelemente (4) der oberen Zeile (8) und der unteren Zeile (10) des Voxels (5) bzw. des Phasenvoxels.

**18.** Verfahren nach einem der Ansprüche 15 bis 17, **dadurch gekennzeichnet, daß** eine zweite auszuwertende Sensorrichtung vorgesehen ist, die in der zweiten Diagonalerstreckung der rechteckigen Sensorelemente (4) orientiert ist.

**19.** Verfahren nach einem der Ansprüche 1 bis 18, **dadurch gekennzeichnet, daß** der zu einem ersten Zeitpunkt unter einem bestimmten Ablagewinkel ($\alpha$) ermittelte Abstand (R) eines Objektes (1) zu der Bilderfassungsvorrichtung zur Prädiktion zukünftiger Abstände des Objektes (1) unter zukünftigen Ablagewinkeln ($\alpha$) unter Annahme statischer - nicht eigenbewegter Objekte - und unter Kenntnis der Relativgeschwindigkeit (v) der Bewegung der Bilderfassungsvorrichtung herangezogen wird, wobei die prädiktiv ermittelten Abstände und zugehörigen Ablagewinkel ($\alpha$) des Objektes (1) insbesondere zur Identifikation eigenbewegter Objekte (1) im Raum herangezogen werden.

**20.** Verfahren nach einem der Ansprüche 1 bis 19, **dadurch gekennzeichnet, daß** eine Vielzahl von Abständen R in verschiedenen Ablagewinkeln ermittelt werden und aus der Vielzahl von Abständen ein 3D-Raumbild erstellt wird.

**Claims**

**1.** A method for determining the distance (R) of at least one object (1) found in space to an image capturing device having a picture generating element (2) and a sensor (3), the sensor (3) having multiple sensor elements (4) arranged essentially flat next to one another, the picture generating element (2) displaying at least a part of the space on the sensor (3) - spatial image -, displaying part of the space captured by the picture generating element (2) at a certain setting angle ($\alpha$) on a certain sensor element (4) and the sensor elements (4) generating corresponding sensor element signals

**characterized in**

**that** the relative velocity (v) of the movement of the image capturing device to the object (1) is determined,

**that** the sensor element signals of at least two sensor elements (4) - voxel (5) - are evaluated to determine a spatial image angular speed ($\omega_{mes,sensor}$),

**that** the orthogonal object angular velocity ($\omega_{mes}$) of the object distance vector indicating from the image capturing device to the object (1) is obtained from the spatial image angular speed ($\omega_{mes,sensor}$) of the object (1) displayed on the sensor elements (4) and

**that** the object distance (R) is determined via the relative velocity (v) of the image capturing device, the orthogonal object angular velocity ($\omega_{mes}$) and the setting angle ($\alpha$) of the object (1).

2. Method according to claim 1, **characterized in that** the spatial image angular speed ($\omega_{mes,sensor}$) is determined by forming a spatial frequency filter using appropriate weighting of the sensor element signals of at least two sensor elements (4) - voxel (5) - in at least one sensor direction (x, y, r, s, t), wherein the spatial frequency filter subjects at least the sensor element signals of the voxel (5) to a spatial frequency filtering in at least two different spatial frequency filter phases ($\varphi_0$, $\varphi_{90}$) and a spatial image phase ($\varphi$) of the voxel (5) is determined from the obtained corresponding spatial frequency filter components ($A_0$, $A_{90}$), that at least two spatial image phases ($\varphi$) of the voxel (5) are determined by means of temporal signal sampling of the spatial frequency filter and the spatial image angular speed ($\omega_{mes,sensor}$) is determined from the temporally spaced spatial image phases ($\varphi$).

3. Method according to claim 1 or 2, **characterized in that** in order to determine the spatial image angular speed ($\omega_{mes,sensor}$) and thus the object distance (R), essentially only the translation component of the movement of the image capturing device is used, in particular in which rotation components ($\omega_{rot}$) contained in the movement of the image capturing device are compensated by stabilizing the image capturing device and/or rotation components ($\omega_{rot}$) contained in the movement of the image capturing device are detected and eliminated.

4. Method according to any one of claims 1 to 3, **characterized in that** by determining spatial image angular speeds ($\omega_x$, $\omega_y$) in more than one sensor direction (x, y, r, s, t), the obtained spatial image angular speeds ($\omega_x$, $\omega_y$) are vectorially added to a total spatial image angular speed ($\omega_{ges}$) and the total spatial image angular speed ($\omega_{ges}$) forms the basis for determining the object distance (R).

5. Method according to any one of claims 1 to 4, **characterized in that** the balance points of the voxels (5) formed in different sensor directions (x, y, r, s, t) for calculating the object distance (R) for a certain part of the space lie close together, in particular are essentially identical.

6. Method according to any one of claims 1 to 5, **characterized in that** the weighting of sensor element signals of the sensor elements (4) of a voxel (5) in a sensor direction (x, y, r, s, t) in a spatial frequency filter phase ($\varphi_0$, $\varphi_{90}$) is chosen in consideration of the geometry of the sensor elements (4) involved so that a good as possible sine approximation (6) is implemented.

7. Method according to claim 6, **characterized in that** the sine approximations (6) of the weighting of the sensor element signals in the at least two spatial frequency phases ($\varphi_0$, $\varphi_{90}$) in a sensor direction (x, y, r, s, t) are relative to one another about essentially a quarter of a spatial period phase-shifted to one another.

8. Method according to any one of claims 1 to 7, **characterized in that** spatial frequency filtering is carried out in at least one sensor direction (x, y, r, s, t) in different spatial frequency filter phases ($\varphi_0$, $\varphi_{90}$), **in that** at least one sensor element (4) is assigned to one voxel (5) - regardless of the spatial frequency filter phase ($\varphi_0$, $\varphi_{90}$) to be evaluated - and the sensor (3) is shifted in and/or against the one sensor direction (x, y, r, s, t) corresponding to the spatial frequency filter components ($A_0$, $A_{90}$) to be achieved in the respective spatial frequency filter phase ($\varphi_0$, $\varphi_{90}$) - sensor shift - and/or the spatial image is shifted in and/or against the one sensor direction (x, y, r, s, t) corresponding to the spatial frequency filter components ($A_0$, $A_{90}$) to be achieved in the respective spatial frequency filter phase ($\varphi_0$, $\varphi_{90}$) - spatial image shift - wherein the spatial image shift is achieved on the sensor (3) in particular by changing the position of the picture generating element (2).

9. Method according to any one of claims 1 to 7, **characterized in that** spatial frequency filtering is carried out in at least one sensor direction (x, y, r, s, t) in different spatial frequency filter phases ($\varphi_0$, $\varphi_{90}$), **in that** for each spatial

frequency filter phase ($\varphi_0$, $\varphi_{90}$) - at least partially - different sensor elements (4) are assigned to a voxel (5) - phase voxel - wherein the phase voxels created in this manner are opposingly spatially shifted - voxel shift - in the sensor direction (x, y, r, s, t) to be evaluated.

10. Method according to any one of claims 1 to 9, **characterized in that** not only are the weighted sensor element signals of the respective voxel (5) - central voxel - defining the spatial period used in determining the spatial frequency filter components ($A_0$, $A_{90}$) of the spatial frequency filter phases ($\varphi_0$, $\varphi_{90}$) of a voxel (5) in one sensor direction (x, y, r, s, t), but additionally, also the sensor signals of at least one repetition of the central voxel (5) - auxiliary voxel (7) - lying in the sensor direction (x, y, r, s, t) to be evaluated, so that the central voxel (5) and the auxiliary voxel (7) define a voxel row, wherein, in particular the corresponding sensor signals of the central voxel (5) and the auxiliary voxel (7) are added together.

11. Method according to claim 10, **characterized in that** the sensor signals of the auxiliary voxels (7) are weighted less than the corresponding sensor signals of the central voxel (5), in particular are decreasingly weighted with increasing distance from the central voxel (5), in particular according to a bell-shaped weighting curve, preferably according to a harmonic weighting curve, preferably according to a weighting curve without a constant component.

12. Method according to any one of claims 1 to 11, **characterized in that** the sensor elements (4) of the sensor (3) are designed hexagonally - hexel - and form a hexagonal parquet of the sensor (3), wherein for each sensor direction (r, s, t) to be evaluated by spatial frequency filtering at least four hexel are combined to a two-rowed voxel (5), in particular wherein the hexel adjacent to each other in a row of the voxel (5) form a spatial frequency filter for evaluation in a spatial frequency filter phase ($\varphi_0$, $\varphi_{90}$) and in particular are weighted with different algebraic signs.

13. Method according to any one of claims 1 to 11, **characterized in that** the sensor elements (4) of the sensor (3) are designed hexagonally - hexel - and form a hexagonal parquet of the sensor (3), wherein for each sensor direction (r, s, t) to be evaluated by spatial frequency filtering at least six hexel are combined to a three-rowed voxel (5), in particular wherein the hexel adjacent to each other in the middle row of the voxel (5) form a spatial frequency filter for evaluation in a spatial frequency filter phase ($\varphi_{90}$) and the hexels adjacent each other in both outer rows of the voxels (5) form a spatial frequency filter for evaluation in another spatial frequency filter phase ($\varphi_0$), wherein the corresponding sensor signals of the sensor elements (4) are weighted in particular with different algebraic signs.

14. Method according to claim 12 or 13, **characterized in that** the voxel (5) is subjected to spatial frequency filtering in two sensor directions (r, s), wherein the sensor directions (r, s) essentially form an angle of 120° or, respectively, 240° or that the voxel (5) is subjected to spatial frequency filtering in three sensor directions (r, s, t), wherein the sensor directions essentially form an angle of respectively 120°.

15. Method according to any one of claims 1 to 11, **characterized in that** the sensor elements (4) of the sensor (3) are designed to be rectangular, in particular square and form an essentially orthogonal parquet of the sensor (3), wherein at least one first sensor direction (x, y) to be evaluated by spatial frequency filtering stretching diagonally to the square sensor elements (4) is chosen and each of six sensor elements (4) are combined to a three-rowed voxel (5) or phase voxel having each two sensor elements (4) in each row (8, 9, 10) of the voxel (5) for evaluation in a spatial frequency filter phase ($\varphi_0$, $\varphi_{90}$).

16. Method according to claim 15, **characterized in that** to determine the spatial frequency filter component ($A_0$) of a first spatial frequency filter phase ($\varphi_0$), the sensor element signals of each of the two sensor elements (4) of the three rows (8, 9, 10) of the voxel (5) or phase voxel are weighted with inverse algebraic signs, wherein the three sensor elements having each sensor element signals weighted with the same algebraic sign are arranged in the shape of an arrow pointing in the direction of the diagonal extension and that to determine the spatial frequency component ($A_{90}$) of a second spatial frequency filter phase ($\varphi_{90}$) while keeping the sensor elements (4) of the middle row (9) of the voxels (5) or phase voxels, both sensor elements (4) of the upper row (8) and the lower row (9) of the voxels (5) or the phase voxels are arranged and their sensor element signals are weighted with an algebraic sign so that the three sensor elements (4) having each sensor element signals weighted with the same algebraic signal point in an arrow-like manner in the other direction of the diagonal extension.

17. Method according to claim 15 or 16, **characterized in that** the sensor element signals of the sensor elements (4) of the middle row (9) of the voxels (5) or the phase voxels are weighted according to amount essentially twice as heavily as the sensor element signals of the sensor elements (4) of the upper row (8) and the lower row (10) of the voxels (5) or the phase voxels.

# EP 2 201 326 B1

**18.** Method according to any one of claims 15 to 17, **characterized in that** a second sensor direction to be evaluated is provided that is oriented in the second diagonal extension of the rectangular sensor elements (4).

**19.** Method according to any one of claims 1 to 18, **characterized in that** the distance (R) of an object (1) to the image capturing device determined at a first point in time at a certain setting angle ($\alpha$) is used for predicting future distances of objects (1) at future setting angles ($\alpha$), assuming static - not moving on their own - objects and acknowledging the relative velocity (v) of the movement of the image detecting device, wherein the predicted, determined distances and associated setting angles ($\alpha$) of the object (1) are used in particular for identifying objects (1) in a space that do move on their own.

**20.** Method according to any one of claims 1 to 19, **characterized in that** a plurality of distances (R) are determined at different setting angles and a 3D space image is created from the plurality of distances.

## Revendications

**1.** Procédé pour déterminer la distance (R) entre au moins un objet (1) qui se trouve dans l'espace et un dispositif d'acquisition d'image comprenant un élément générateur d'image (2) et un capteur (3), le capteur (3) se composant de plusieurs éléments de détection (4) sensiblement plats disposés les uns à côté des autres, l'élément générateur d'image (2) représentant au moins une partie de l'espace sur le capteur (3) - représentation de l'espace -, une partie de l'espace captée par l'élément générateur d'image (2) sous un angle de réception ($\alpha$) donné étant représentée sur un élément de détection (4) donné et des signaux d'élément de détection correspondants étant générés par les éléments de détection (4),
**caractérisé en ce**
**que** la vitesse relative (v) du mouvement du dispositif d'acquisition d'image par rapport à l'objet (1) est déterminée,
**qu'**une vitesse angulaire de représentation de l'espace ($\omega_{mes,sensor}$) est déterminée en interprétant les signaux d'élément de détection d'au moins deux éléments de détection (4) - voxels (5) -,
**que** la vitesse angulaire orthogonale de l'objet ($\omega_{mes}$) du vecteur de distance d'objet dirigé sur l'objet (1) par le dispositif d'acquisition d'image est obtenue à partir de la vitesse angulaire de représentation de l'espace ($\omega_{mes,sensor}$) de l'objet (1) représenté sur les éléments de détection (4) et
**que** la distance de l'objet (R) est déterminée par le biais de la vitesse relative (v) du dispositif d'acquisition d'image, la vitesse angulaire orthogonale de l'objet ($\omega_{mes}$) et l'angle de réception ($\alpha$) de l'objet (1).

**2.** Procédé selon la revendication 1, **caractérisé en ce que** la vitesse angulaire de représentation de l'espace ($\omega_{mes,sensor}$) est déterminée en formant un filtre de fréquence de lieu par une pondération appropriée des signaux d'élément de détection d'au moins deux éléments de détection (4) - voxels (5) - dans au moins une direction de détection (x, y, r, s, t), le filtre de fréquence de lieu soumettant au moins les signaux d'élément de détection du voxel (5) à un filtrage de fréquence de lieu dans au moins deux phases de filtrage de fréquence de lieu ($\varphi_0$, $\varphi_{90}$) différentes, et une phase de représentation de l'espace ($\varphi$) du voxel (5) étant déterminée à partir des composantes de filtrage de fréquence de lieu ($A_0$, $A_{90}$) correspondantes obtenues, **en ce qu'**au moins deux phases de représentation de l'espace ($\varphi$) du voxel (5) sont déterminées par échantillonnage dans le temps du signal du filtre de fréquence de lieu et la vitesse angulaire de représentation de l'espace ($\omega_{mes,sensor}$) est déterminée à partir des phases de représentation de l'espace ($\varphi$) espacées dans le temps.

**3.** Procédé selon la revendication 1 ou 2, **caractérisé en ce que** pour déterminer la vitesse angulaire de représentation de l'espace ($\omega_{mes,sensor}$) et ainsi la distance de l'objet (R), seules sont pour l'essentiel utilisées les composantes de translation du mouvement du dispositif d'acquisition d'image, notamment en compensant les composantes de rotation ($\omega_{rot}$) incluses du mouvement du dispositif d'acquisition d'image par stabilisation du dispositif d'acquisition d'image et/ou en détectant et en éliminant les composantes de rotation ($\omega_{rot}$) incluses du mouvement du dispositif d'acquisition d'image.

**4.** Procédé selon l'une des revendications 1 à 3, **caractérisé en ce que** lors de la détermination des vitesses angulaires de représentation de l'espace ($\omega_x$, $\omega_y$) dans plus d'une direction de détection (x, y, r, s, t), les vitesses angulaires de représentation de l'espace ($\omega_x$, $\omega_y$) obtenues sont additionnées de manière vectorielle pour former une vitesse angulaire de représentation de l'espace totale ($\omega_{ges}$) et la vitesse angulaire de représentation de l'espace totale ($\omega_{ges}$) sert de base pour la détermination de la distance de l'objet (R).

**5.** Procédé selon l'une des revendications 1 à 4, **caractérisé en ce que** les barycentres des voxels (5) formés pour une partie donnée de l'espace dans différentes directions de détection (x, y, r, s, t) pour calculer la distance de l'objet (R) sont proches les uns des autres, notamment sensiblement identiques.

6. Procédé selon l'une des revendications 1 à 5, **caractérisé en ce que** les pondérations des signaux d'élément de détection des éléments de détection (4) d'un voxel (5) dans une direction de détection (x, y, r, s, t) dans une phase de filtrage de fréquence de lieu ($\varphi_0$, $\varphi_{90}$) sont choisies en tenant compte de la géométrie des éléments de détection (4) participants de manière à réaliser une approximation sinusoïdale (6) la meilleure possible.

7. Procédé selon la revendication 6, **caractérisé en ce que** les approximations sinusoïdales (6) des pondérations des signaux d'élément de détection dans les au moins deux phases de filtrage de fréquence de lieu ($\varphi_0$, $\varphi_{90}$) dans une direction de détection (x, y, r, s, t) sont déphasées l'une par rapport à l'autre et d'essentiellement un quart de période de lieu l'une par rapport à l'autre.

8. Procédé selon l'une des revendications 1 à 7, **caractérisé en ce que** le filtrage de fréquence de lieu dans au moins une direction de détection (x, y, r, s, t) est effectué dans des phases de filtrage de fréquence de lieu ($\varphi_0$, $\varphi_{90}$) différentes en associant à demeure au moins un élément de détection (4) à un voxel (5) - indépendamment de la phase de filtrage de fréquence de lieu ($\varphi_0$, $\varphi_{90}$) à interpréter - et en décalant le capteur (3) dans et/ou à l'opposé de la direction de détection (x, y, r, s, t) conformément aux composantes de filtrage de fréquence de lieu ($A_0$, $A_{90}$) à obtenir dans la phase de filtrage de fréquence de lieu ($\varphi_0$, $\varphi_{90}$) correspondante - décalage du capteur - et/ou en décalant la représentation de l'espace dans et/ou à l'opposé de la direction de détection (x, y, r, s, t) conformément aux composantes de filtrage de fréquence de lieu ($A_0$, $A_{90}$) à obtenir dans la phase de filtrage de fréquence de lieu ($\varphi_0$, $\varphi_{90}$) correspondante - décalage de la représentation de l'espace -, le décalage de la représentation de l'espace étant notamment obtenu sur le capteur (3) par une modification de la position de l'élément générateur d'image (2).

9. Procédé selon l'une des revendications 1 à 7, **caractérisé en ce que** le filtrage de fréquence de lieu dans au moins une direction de détection (x, y, r, s, t) est effectué dans des phases de filtrage de fréquence de lieu ($\varphi_0$, $\varphi_{90}$) différentes en associant à demeure, pour chaque phase de filtrage de fréquence de lieu ($\varphi_0$, $\varphi_{90}$) à interpréter, - au moins en partie - différents éléments de détection (4) à un voxel (5) - voxel de phase -, les voxels de phase ainsi produits étant déphasés en lieu mutuellement dans la direction de détection (x, y, r, s, t) à interpréter - décalage de voxel -.

10. Procédé selon l'une des revendications 1 à 9, **caractérisé en ce que** pour définir les composantes de filtrage de fréquence de lieu ($A_0$, $A_{90}$) des phases de filtrage de fréquence de lieu ($\varphi_0$, $\varphi_{90}$) d'un voxel (5) dans une direction de détection (x, y, r, s, t), ce ne sont pas seulement les signaux d'élément de détection pondérés du voxel (5) concerné définissant la période de lieu - voxel central - qui sont utilisés, mais en plus aussi les signaux de détection d'au moins une répétition périodique de lieu du voxel central (5) - voxel secondaire (7) - se trouvant dans la direction de détection (x, y, r, s, t) à interpréter, de sorte que le voxel central (5) et le voxel secondaire (7) définissent une ligne de voxel, les signaux de détection correspondants, notamment, du voxel central (5) et du voxel secondaire (7) étant additionnés.

11. Procédé selon la revendication 10, **caractérisé en ce que** les signaux de détection du voxel secondaire (7) ont un poids plus faible que les signaux de détection correspondants du voxel central (5), notamment un poids plus faible à mesure que la distance du voxel central (5) augmente, notamment selon une courbe de pondération en forme de cloche, de préférence selon une courbe de pondération harmonique, de préférence selon une courbe de pondération sans composante continue.

12. Procédé selon l'une des revendications 1 à 11, **caractérisé en ce que** les éléments de détection (4) du capteur (3) sont de forme hexagonale - hexels - et forment un parquetage hexagonal du capteur (3), au moins quatre hexels étant à chaque fois rassemblés en un voxel (5) à deux lignes pour chaque direction de détection (r, s, t) à interpréter par filtrage de fréquence de lieu, les hexels voisins dans une ligne du voxel (5) formant notamment un filtre de fréquence de lieu pour l'interprétation à chaque fois d'une phase de filtrage de fréquence de lieu ($\varphi_0$, $\varphi_{90}$) et étant pondérés à cet effet, notamment avec des signes différents.

13. Procédé selon l'une des revendications 1 à 11, **caractérisé en ce que** les éléments de détection (4) du capteur (3) sont de forme hexagonale - hexels - et forment un parquetage hexagonal du capteur (3), au moins six hexels étant à chaque fois rassemblés en un voxel (5) à trois lignes pour chaque direction de détection (r, s, t) à interpréter par filtrage de fréquence de lieu, les hexels voisins dans la ligne centrale du voxel (5) formant notamment un filtre de fréquence de lieu pour l'interprétation dans une phase de filtrage de fréquence de lieu ($\varphi_{90}$) et les hexels voisins dans les deux lignes extérieures du voxel (5) formant un filtre de fréquence de lieu pour l'interprétation dans une autre phase de filtrage de fréquence de lieu ($\varphi_0$), les signaux de détection correspondants des éléments de détection (4) étant pondérés à cet effet, notamment avec des signes différents.

**14.** Procédé selon la revendication 12 ou 13, **caractérisé en ce que** le voxel (5) est soumis à un filtrage de fréquence de lieu dans deux directions de détection (r, s), les directions de détection (r, s) formant sensiblement un angle de 120° ou de 240° ou **en ce que** le voxel (5) est soumis à un filtrage de fréquence de lieu dans trois directions de détection (r, s, t), les directions de détection formant sensiblement un angle respectif de 120°.

**15.** Procédé selon l'une des revendications 1 à 11, **caractérisé en ce que** les éléments de détection (4) du capteur (3) sont de forme parallélépipédique, notamment carrée, et forment un parquetage sensiblement orthogonal du capteur (3), au moins une première direction de détection (x, y) à interpréter par filtrage de fréquence de lieu étant sélectionnée dans la projection diagonale des éléments de détection (4) parallélépipédiques, et six éléments de détection (4) étant à chaque fois rassemblés en un voxel (5) à trois lignes ou voxel de phase, avec à chaque fois deux éléments de détection (4) dans chaque ligne (8, 9, 10) du voxel (5) pour l'interprétation dans une phase de filtrage de fréquence de lieu ($\varphi_0$, $\varphi_{90}$).

**16.** Procédé selon la revendication 15, **caractérisé en ce que** pour déterminer la composante de filtrage de fréquence de lieu ($A_0$) d'une première phase de filtrage de fréquence de lieu ($\varphi_0$), les signaux d'élément de détection des deux éléments de détection (4) respectifs des trois lignes (8, 9, 10) du voxel (5) ou du voxel de phase sont pondérés avec des signes opposés, les trois éléments de détection (4) ayant les signaux d'élément de détection respectivement pondérés avec le même signe étant disposés en forme de flèche dirigée dans l'une des directions de la projection diagonale, et **en ce que** pour déterminer la composante de filtrage de fréquence de lieu ($A_{90}$) d'une deuxième phase de filtrage de fréquence de lieu ($\varphi_{90}$) en conservant les éléments de détection (4) de la ligne centrale (9) du voxel (5) ou du voxel de phase et la pondération des signaux d'élément de détection des éléments de détection (4) de la ligne centrale (9) du voxel (5) ou du voxel de phase, les deux éléments de détection (4) de la ligne supérieure (8) et de la ligne inférieure (10) du voxel (5) ou du voxel de phase sont disposés de telle sorte et leurs signaux d'élément de détection sont pondérés avec un signe de telle sorte que les trois éléments de détection (4) ayant les signaux d'élément de détection respectivement pondérés avec le même signe sont dirigés en forme de flèche dans l'autre direction de la projection diagonale.

**17.** Procédé selon la revendication 15 ou 16, **caractérisé en ce que** les signaux d'élément de détection des éléments de détection (4) de la ligne centrale (9) du voxel (5) ou du voxel de phase ont, du point de vue de leur valeur absolue, un poids sensiblement égal au double de celui des signaux d'élément de détection des éléments de détection (4) de la ligne supérieure (8) et de la ligne inférieure (10) du voxel (5) ou du voxel de phase.

**18.** Procédé selon l'une des revendications 15 à 17, **caractérisé en ce qu'**il est prévu une deuxième direction de détection à interpréter, laquelle est orientée dans la deuxième projection diagonale des éléments de détection (4) parallélépipédiques.

**19.** Procédé selon l'une des revendications 1 à 18, **caractérisé en ce que** la distance (R) entre un objet (1) et le dispositif d'acquisition d'image déterminée à un premier instant sous un angle de réception ($\alpha$) donné est utilisée pour prédire les futures distances de l'objet (1) sous des futurs angles de réception ($\alpha$) en supposant des objets statiques - sans mouvement autonome - et en connaissant la vitesse relative (v) du mouvement du dispositif d'acquisition d'image, les distances déterminées par prédiction et les angles de réception ($\alpha$) associés de l'objet (1) étant notamment utilisés pour l'identification des objets (1) à mouvement autonome dans l'espace.

**20.** Procédé selon l'une des revendications 1 à 19, **caractérisé en ce qu'**une pluralité de distances (R) sont déterminées dans différents angles de réception et une image 3D de l'espace est créée à partir de la pluralité de distances.

Fig. 1

Fig. 2a

Fig. 2b

Fig. 3

a)

| | |
|---|---|
| − | 270° |
| + | 0° |
| + | 90° |
| − | 180° |
| − | 270° |
| + | 0° |
| + | 90° |
| − | 180° |
| − | 270° |

| | |
|---|---|
| + | |
| + | 0° |
| − | 90° |
| − | 180° |
| + | 270° |
| + | 0° |
| − | 90° |
| − | 180° |
| + | 270° |

$\varphi_{y,0}$   $\varphi_{y,90}$

b)

| + | + | − | − | + |
|---|---|---|---|---|
| 0° | 90° | 180° | 270° | 0° |

| − | + | + | − | − |
|---|---|---|---|---|
| 270° | 0° | 90° | 180° | 270° |

**Fig. 4**

$$\varphi_y = \arctan \frac{A_{y,90}}{A_{y,0}}$$

$$\varphi_x = \arctan \frac{A_{x,90}}{A_{x,0}}$$

$$\omega_y = \frac{\Delta \varphi_y}{\Delta t}$$

$$\omega_x = \frac{\Delta \varphi_x}{\Delta t}$$

$$\vec{\omega}_{ges} = \vec{\omega}_x + \vec{\omega}_y$$

Fig. 5

$$\varphi_r = \arctan \frac{A_{r,90}}{A_{r,0}}$$

$$\varphi_s = \arctan \frac{A_{s,90}}{A_{s,0}}$$

$$\omega_r = \frac{\Delta \varphi_r}{\Delta t}$$

$$\omega_s = \frac{\Delta \varphi_s}{\Delta t}$$

$$\vec{\omega}_{ges} = \vec{\omega}_r + \vec{\omega}_s$$

Fig. 6

Fig. 7

Fig. 8

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006069978 A2
- US 6535114 B1
- WO 9810255 A

**In der Beschreibung aufgeführte Nicht-Patentliteratur**

- **VON A. J. DAVISON ; I. D. REID ; N, D. MOLTON ; O. STASSE.** MonoSLAM: Real-Time Single Camera SLAM. *IEEE Transactions on Pattern Analysis and Machine Intelligence,* Juni 2007, vol. 29 (6